# EUROPEAN PATENT APPLICATION

(11) **EP 2 878 483 A1**
(43) Date of publication of application: **03.06.2015**
(21) Application number: 13822880.4
(22) Date of filing: 24.07.2013
(51) Int. Cl.: B60N 2/44, A47C 7/62

(54) **SEAT DEVICE**

(30) Priority: 25.07.2012 JP 2012164319; 22.04.2013 JP 2013089005
(71) Applicant: Fujikura Ltd., Tokyo 135-8512 (JP)
(72) Inventor: NAKAZAKI Shigeru, Sakura-shi Chiba 285-8550 (JP); HASEGAWA Masashi, Sakura-shi Chiba 285-8550 (JP)
(74) Representative: Grünecker Patent- und Rechtsanwälte PartG mbB
(86) International application number: PCT/JP2013/070111
(87) International publication number: WO 2014/017563

(57) **Abstract**

A seat device 5 of the invention includes a plurality of springs 73 that are stretched in parallel over an opening of a frame 72, a cushion pad 60 that is placed above the springs, members 72C and 72D that do not move in synchronization with the displacement of the cushion pad 60 caused by a sitting operation, and a pressure sensitive switch SW1 that is disposed below the cushion pad 60 while having a gap with respect to a lower surface of the cushion pad. One switch element 12 that forms the switch in the pressure sensitive switch SW1 is supported by the members 72C and 72D, and the other switch element 22 that forms the switch is disposed between the one switch element 12 and the cushion pad 60 so as to be displaced toward the one switch element.

## Description

### Technical Field

The present invention relates to a seat device that is very suitable for the technical field of detecting a sitting state in a seat of a vehicle or the like.

### Background Art

As one of safety systems of vehicles, an alarm system has been practically used which alarms a state where a seat belt is not fastened when a person gets on a vehicle. In the alarm system, an alarm is generated when the operation of fastening the seat belt is not detected in the state where the person sits on a seat. Patent Document 1 below proposes a seat sensor that is used in such an alarm system.

The seat sensor of Patent Document 1 includes a membrane switch that includes a detection unit disposed below a cushion pad, a holder that includes a pressure receiving portion supported by S-springs and disposed below the detection unit, and a spacer that is interposed between the detection unit and the pressure receiving portion.

The detection unit of the membrane switch includes upper and lower films and a separation maintaining portion disposed between the upper and lower films, and the contact points disposed on the films contact each other through the separation maintaining portion by the pressing of the cushion pad.

### Citation List

### Patent Document

[Patent Document 1] JP-A-2011-105278

### Summary of Invention

### Objects to be Achieved by the Invention

Incidentally, since the upper film forming the detection unit of Patent Document 1 contacts the lower surface of the cushion pad, the contact points may easily contact each other, for example, even when an article is placed on the cushion pad. Thus, a problem arises in that an erroneous detection frequently occurs.

Therefore, an object of the invention is to provide a seat device capable of appropriately detecting a sitting state.

### Means for Achieving the Objects

The inventor has carried out a careful examination in order to solve the above-described problem, and has found why the seat sensor of Patent Document 1 may not appropriately detect the sitting state. That is, even when the cushion pad is displaced downward by the pressing in the case where the seat sensor is supported by the springs, the springs are displaced downward along with the cushion pad, and hence the relative position between the cushion pad and the seat sensor substantially does not change. For this reason, even when a person sits on the cushion pad or an article other than the person is placed on the cushion pad, there is a high possibility that the contact points of the seat sensor may contact each other. Thus, it is not possible to sufficiently distinguish the person and the article from each other.

Therefore, the inventor has contrived the invention capable of solving the above-described problem by the more careful examination.

According to the invention, a seat device includes: a plurality of springs that are stretched in parallel over an opening of a frame; a cushion pad that is placed on the plurality of springs; a member that does not move in synchronization with the displacement of the cushion pad caused by a sitting operation; and a pressure sensitive switch that is disposed below the cushion pad inside the opening of the frame while having a gap with respect to a lower surface of the cushion pad, wherein one switch element that forms a switch in the pressure sensitive switch is supported by the member, wherein the other switch element that forms the switch in the pressure sensitive switch is disposed between the one switch element and the cushion pad so as to be displaced toward the one switch element, and wherein the one switch element and the other switch element are disposed so that at least a part of the elements face each other in the up and down direction.

In such a seat device, since one switch element of the pressure sensitive switch is supported by the member that does not move in synchronization with the displacement of the cushion pad caused by the sitting operation, the cushion pad is not displaced with respect to the position of the one switch element even when the cushion pad is displaced.

Incidentally, when an article lighter than the person is placed on the seat device, the cushion pad is not substantially displaced. However, when the person sits on the seat device, the cushion pad is largely displaced. The other switch element is disposed between the cushion pad having such a displacement and the one switch element not displaced regardless of the displacement of the cushion pad so that the other switch element is displaced toward the one switch element.

Accordingly, when the article is placed on the cushion pad, the cushion pad is not substantially displaced. For this reason, it is possible to suppress an erroneous detection occurring when the pressure sensitive switch is turned on due to the article. Meanwhile, when the person sits on the seat device, the cushion pad is displaced. For this reason, the relative position between the one switch element and the other switch element changes so that the switch elements contact each other, and hence the pressure sensitive switch is turned on.

In this way, a seat device capable of appropriately detecting a sitting state is provided.

Further, the pressure sensitive switch may face the lower surface of the cushion pad.

In such a configuration, it is possible to ensure a large contact portion in the pressure sensitive switch contacting the lower surface of the cushion pad when the cushion pad is displaced so as to be collapsed compared to the case where the pressure sensitive switch does not face the lower surface of the cushion pad. Accordingly, it is possible to more accurately distinguish the person and the article from each other.

Further, the pressure sensitive switch may be disposed below the plurality of springs.

In such a configuration, it is possible to suppress an erroneous detection occurring when the pressure sensitive switch is turned on while being pressed by the cushion pad which is pressed when the article lighter than the person is placed on the seat device compared to the case where the pressure sensitive switch is not disposed below the plurality of springs.

Further, the pressure sensitive switch may be disposed at a position not overlapping the spring in the vertical direction of the spring.

In such a configuration, it is possible to prevent the pressure sensitive switch from being pressed by the spring having rigidity larger than the cushion pad, and hence to improve the durability of the pressure sensitive switch.

Further, the pressure sensitive switch may be disposed near the frame inside the opening of the frame.

In such a configuration, it is possible to easily ensure the arrangement space of the electronic component to be disposed below the cushion pad compared to the case where the pressure sensitive switch is disposed in the center area inside the opening. Further, when the person sits on the seat device, the front cushion pad is displaced so as to be collapsed as a whole from the hip point. For this reason, the inventor has found that the pressure is applied from the cushion pad to the seat sensor even when the pressure sensitive switch is disposed near the frame inside the opening similarly to the case where the seat sensor is disposed in the center area inside the opening. Accordingly, it is possible to appropriately detect a state where the person sits on the seat device while ensuring the arrangement space of the electronic component to be disposed below the cushion pad.

Further, the sensor mount for placing the pressure sensitive switch thereon may be provided, and the sensor mount may be fixed to the member.

In such a configuration, since the seat sensor is supported through the sensor mount fixed to the member that does not move in synchronization with the displacement of the cushion pad caused by the sitting operation, the seat sensor may be disposed below the cushion pad through the sensor mount even when the member is not provided at a position other than the lower side of the cushion pad. Accordingly, it is possible to support the seat sensor at the lower side of the cushion pad while ensuring the arrangement space of the electronic component to be disposed below the cushion pad.

Further, the sensor mount may have elasticity in the displacement direction of the cushion pad.

Such a sensor mount may move in a direction in which the pressure is applied from the cushion pad after the pressure sensitive switch is turned on in response to the pressure applied from the cushion pad caused by the sitting operation. Accordingly, it is possible to prevent an excessive pressure from being applied to the pressure sensitive switch, and hence to improve the durability of the pressure sensitive switch.

Further, the seat device may further include a reinforcement member that is provided between the pressure sensitive switch and the cushion pad facing the pressure sensitive switch and has rigidity larger than the rigidity of the cushion pad, and the reinforcement member may be synchronized with the displacement of the cushion pad.

When such a reinforcement member is provided, it is possible to prevent the cushion pad facing the reinforcement member from being drooped to the lower side of the reinforcement member even when the lower surface of the cushion pad is drooped due to the degradation in time of the cushion pad. Accordingly, it is possible to suppress degradation in precision of distinguishing the person and the article or the persons having different body weights caused by the drooping of the lower surface of the cushion pad. In addition, even when the lower surface of the cushion pad has unevenness, it is possible to suppress degradation in precision of distinguishing the person and the article or the persons having different body weights due to the unevenness.

Further, the pressure sensitive switch may include a first insulation sheet which has flexibility, a second insulation sheet which has flexibility and is disposed near the lower surface of the cushion pad in relation to the first insulation sheet, a sheet-like spacer which has an opening and is interposed between the first insulation sheet and the second insulation sheet, the one switch element which is provided on the surface of the first insulation sheet, and the other switch element which is provided on the surface of the second insulation sheet and faces the one switch element through the opening of the spacer.

Further, in the pressure sensitive switch, a cushion member may be provided between the member and the first insulation sheet so as to cover at least a part of the opening of the spacer through the first insulation sheet.

According to such a pressure sensitive switch, when the pressure is applied to both the first insulation sheet and the second insulation sheet, both insulation sheets are bent so as to enter the opening of the spacer, and the electrodes facing each other through the opening contact each other, so that the pressure sensitive switch is turned on.

However, when the pressure sensitive switch is placed on the article which is not deformed by the pressure, the first insulation sheet is not bent, and only the second insulation sheet is bent. Accordingly, there is a possibility that the contact pressure of the pair of electrodes may be weakened.

In this regard, since the seat sensor includes the cushion member at the opposite side to the spacer in the first insulation sheet, the first insulation sheet may be bent by the cushion member regardless of whether the pressure sensitive switch is placed on the article which is not deformed by the pressure.

Further the cushion member may be formed as a double-layer structure including a first cushion member provided at the opposite side to the spacer in the first insulation sheet and a second cushion member provided at the opposite side to the first insulation sheet in the first cushion member and having rigidity different from the rigidity of the first cushion member.

In such a configuration, it is possible to reduce a load applied from the cushion pad using the other cushion member by adjusting the degree of the deformation of the first insulation sheet using one cushion member. Accordingly, it is possible to improve the durability of the pressure sensitive switch and to adjust the sensitivity of the pressure sensitive switch.

Further, the rigidity of the second cushion member may be smaller than the rigidity of the first cushion member.

In such a configuration, it is possible to prevent the first insulation sheet from being bent by an extra amount while the first cushion member contacting the pressure sensitive switch mainly serves as the member that adjusts the degree of the deformation of the first insulation sheet and the second cushion member far from the pressure sensitive switch mainly serves as the member that reduces the load applied from the cushion pad. Accordingly, it is possible to further improve the durability of the pressure sensitive switch and to adjust the sensitivity of the pressure sensitive switch compared to the case where the first cushion member and the second cushion member are formed as a single-layer cushion member corresponding to the second cushion member.

Further, the pressure sensitive switch may include a first pressure sensitive switch and a second pressure sensitive switch that are adjacent to each other, the first pressure sensitive switch may be turned on when a first weight or more is applied from the seat surface of the cushion pad, and the second pressure sensitive switch may be turned on when a second weight larger than the first weight is applied from the seat surface of the cushion pad.

In such a configuration, the different weights applied to the cushion pad may be obtained as two patterns as the case where only the first pressure sensitive switch is turned on and the case where both the first pressure sensitive switch and the second pressure sensitive switch are turned on. Accordingly, it is possible to distinguish the persons having different body weights.

### Effect of Invention

According to the invention with the above-described configuration, it is possible to realize a seat device capable of appropriately detecting a sitting state.

### Brief Description of Drawings

Fig. 1 is a diagram in which a seat sensor used in a seat device of a first embodiment is viewed from the top side.
Fig. 2 is an exploded diagram illustrating a configuration of a first sensor part.
Fig. 3 is a diagram illustrating a state of a cross-section taken along line W-W of Fig. 1.
Fig. 4 is a diagram illustrating an equivalent circuit of the seat sensor.
Fig. 5 is a diagram illustrating the state in which the seat device of the first embodiment is viewed in the inclined direction.
Fig. 6 is a diagram illustrating a state of a cross-section taken along line X-X of Fig. 5.
Fig. 7 is a diagram illustrating a state where a person sits on the seat device of the first embodiment when viewed from the same viewing point as Fig. 6.
Figs. 8(A) and 8(B) are diagrams illustrating a displacement amount measurement state and a displacement amount measurement result in a lower surface of a cushion pad and a lower portion of a spring when a person sits on the cushion pad.
Fig. 9 is a diagram illustrating a state where a pressure sensitive switch is turned on when viewed from the cross-section taken along line Y-Y of Fig. 7.
Fig. 10 is a diagram illustrating a seat device of a second embodiment when viewed from the same viewing point as Fig. 6.
Fig. 11 is a diagram illustrating a state where a person sits on the seat device of the second embodiment when viewed from the same viewing point as Fig. 6.
Fig. 12 is a diagram illustrating a seat device of a third embodiment when viewed from the same viewing point as Fig. 6.
Fig. 13 is a diagram illustrating a seat device of a fourth embodiment when viewed from the same viewing point as Fig. 5.
Fig. 14 is a diagram illustrating a state of a cross-section taken along line Z-Z of Fig. 13.
Fig. 15 is a diagram illustrating a seat device of a fifth embodiment when viewed from the same viewing point as Fig. 6.
Figs. 16(A) and 16(B) are diagrams illustrating cross-sections of a first pressure sensitive switch and a second pressure sensitive switch when viewed from the same viewing point as Fig. 3.
Fig. 17 is a conceptual diagram illustrating a distribution of a load that is applied to the lower surface of the cushion pad when a person sits on the cushion pad.
Fig. 18 is a diagram illustrating a configuration of a pressure sensitive switch of another embodiment.
Fig. 19 is a diagram illustrating a state of a seat device of another embodiment.
Fig. 20 is a diagram illustrating a relation between a cushion member and an opening of a spacer.
Fig. 21 is a diagram illustrating a pressure sensitive switch including another cushion member when viewed from the same viewing point as Fig. 3.
Fig. 22 is a diagram illustrating a seat device including a reinforcement member when viewed from the same viewing point as Fig. 15.
Fig. 23 is a diagram illustrating a configuration of a seat sensor of another embodiment.
Fig. 24 is a diagram illustrating a configuration of a seat sensor of another embodiment.

### Description of Embodiments

### (1) First Embodiment

A first preferred embodiment of the invention will be described in detail with reference to the drawings.

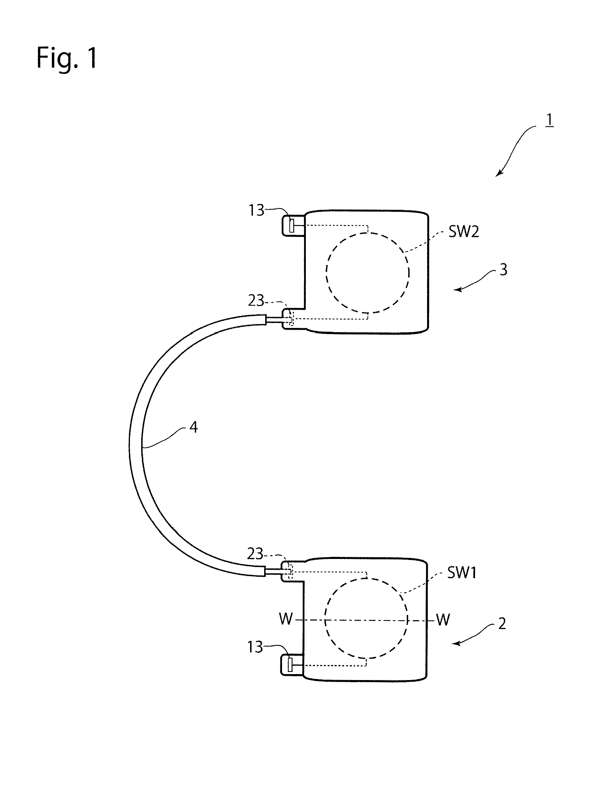

Fig. 1 is a diagram in which a seat sensor 1 used in a seat device of the first embodiment is viewed from the top side. As illustrated in Fig. 1, the seat sensor 1 mainly includes a first sensor part 2, a second sensor part 3, and a cable 4, and the first sensor part 2 and the second sensor part 3 are electrically connected to each other through a cable 4.

The cable 4 is formed by coating a signal wire by an insulation member and is formed as, for example, a coaxial cable or twin core parallel wire.

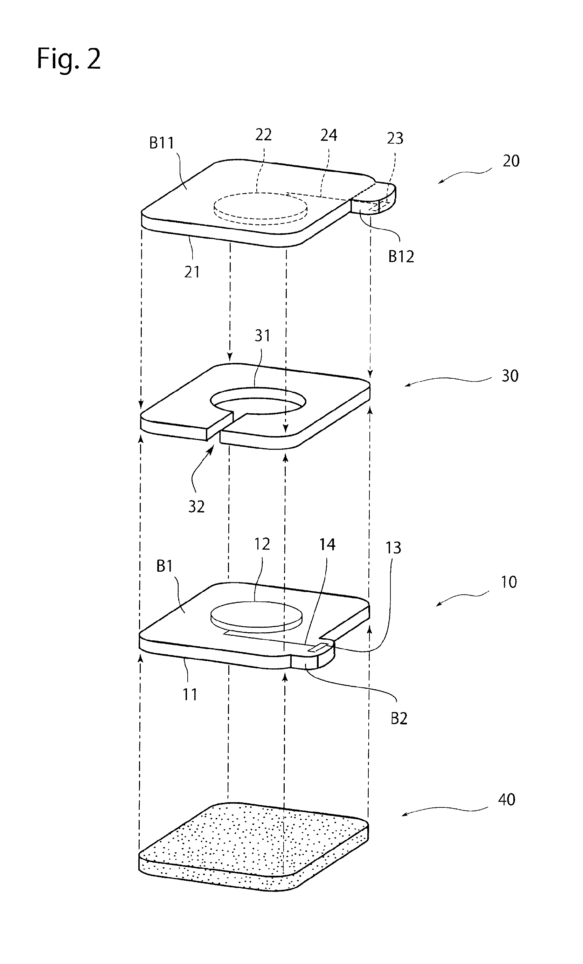

Fig. 2 is an exploded diagram illustrating the configuration of the first sensor part 2. As illustrated in Fig. 2, the first sensor part 2 mainly includes a first electrode sheet 10, a second electrode sheet 20, a spacer 30, and a cushion member 40.

The first electrode sheet 10 includes a first insulation sheet 11, a first electrode 12, and a terminal 13.

The first insulation sheet 11 is formed as a flexible film-like insulation sheet into, for example, a rectangular shape. In the case of the embodiment, the first insulation sheet 11 includes a main block B1 on which the first electrode 12 is disposed and a sub-block B2 on which the terminal 13 is disposed. The sub-block B2 is smaller than the main block B1, and is connected to the end of the main block B1 in the longitudinal direction.

As the material of the first insulation sheet 11, a resin such as polyethylene terephthalate (PET), polybutylene terephthalate (PBT), or polyethylene naphthalate (PEN) may be exemplified.

The first electrode 12 is a switch element that forms a switch and is substantially formed as, for example, a circular metallic print layer. Further, the first electrode 12 is formed on one surface of the main block B1.

The terminal 13 is a conductor layer and is substantially formed of, for example, a square metallic sheet. Further, the terminal 13 is disposed on the surface of the sub-block B2 at the same side as the arrangement surface of the first electrode 12. Here, the terminal is electrically connected to the first electrode 12 through a first interconnection wire 14 and is electrically connected to the electric component of the vehicle through an interconnection wire (not illustrated).

The second electrode sheet 20 includes a second insulation sheet 21, a second electrode 22, and a terminal 23 similarly to the first electrode sheet 10.

The second insulation sheet 21 is formed as a flexible film-like insulation sheet into, for example, a rectangular shape. In the case of the embodiment, the second insulation sheet 21 includes a main block B11 on which the second electrode 22 is disposed and a sub-block B12 on which the terminal 23 is disposed. The main block B11 is formed in the same shape and size as the main block B1 of the first insulation sheet 11, and the sub-block B12 is formed in the same shape and size as the sub-block B2 of the first insulation sheet 11. Furthermore, the connection position of the sub-block B12 connected to the main block B11 is set to be relatively different from the connection position of the sub-block B2 connected to the main block B1 of the first insulation sheet 11.

As the material of the second insulation sheet 21, a resin such as PET, PBT, or PEN may be exemplified similarly to the first insulation sheet 11. Furthermore, the material of the second insulation sheet 21 may be the same as or different from the material of the first insulation sheet 11.

The second electrode 22 is the other switch element that forms a switch and is substantially formed as, for example, a circular metallic print layer. Further, the second electrode 22 is disposed on the surface of the main block B11. In the case of the embodiment, the size of the second electrode 22 is set to be the same as that of the first electrode 12, and the arrangement position of the second electrode 22 is relatively set to be the same as that of the first electrode 12 with respect to the main block B1.

The terminal 23 is a conductor layer and is substantially formed of, for example, a square metallic sheet. Further, the terminal 23 is disposed on the surface of the sub-block B12 at the same side as the arrangement surface of the first electrode 12. Here, the terminal is electrically connected to the second electrode 22 through the second interconnection wire 24 and is electrically connected to one end of the cable 4.

The spacer 30 is formed as a film-like insulation sheet and includes an opening 31. In the case of the embodiment, the spacer 30 is formed in the same shape and size as the main block B1 of the first insulation sheet 11. As the material of the spacer 30, a resin such as PET, PBT, or PEN may be exemplified similarly to the first insulation sheet 11 and the second insulation sheet 21. Furthermore, the material of the spacer 30 may be the same as or different from the material of the first insulation sheet 11 or the second insulation sheet 21.

The peripheral edge shape of the opening 31 is, for example, substantially circular, and the diameter of the opening 31 is slightly smaller than the diameters of the first electrode 12 and the second electrode 22. Further, the arrangement position of the opening 31 is relatively set to be the same as that of the first electrode 12 with respect to the main block B1.

The opening 31 is provided with a slit 32 which is connected to the outside of the spacer 30 in space. That is, one end of the slit 32 is connected to the corresponding opening 31 and the other end thereof is released to the lateral side of the spacer 30.

The cushion member 40 is an elastic member that is deformed so as to be crushed when a pressure is applied to the elastic member and is formed of, for example, a sponge-like resin having a plurality of void holes formed therein, a non-woven cloth having resinous fibers entangled therein, or rubber. In the case of the embodiment, the cushion member 40 is substantially formed in a cuboid shape, and the wide surface thereof is set to be the same as the wide surface of the main block B1 of the first insulation sheet 11.

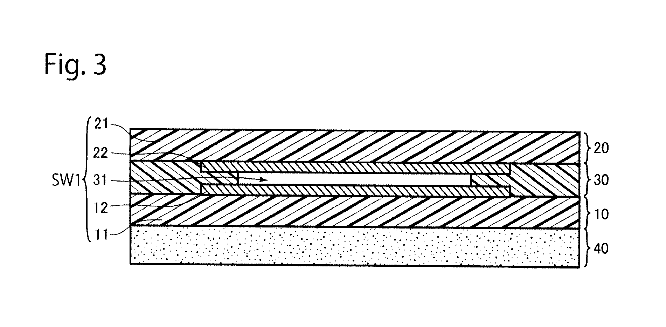

Fig. 3 is a diagram illustrating a state of a cross-section taken along line W-W of Fig. 1. As illustrated in Fig. 3, the first electrode sheet 10 is stuck to one surface of the spacer 30, and the second electrode sheet 20 is stuck to the other surface of the spacer 30. Then, the cushion member 40 is stuck to the opposite surface to the surface facing the spacer 30 in the first insulation sheet 11, thereby forming the first sensor part 2.

In the first sensor part 2, a pressure sensitive switch SW1 is formed by a part of the pair of insulation sheets 11 and 21, a spacer portion interposed between the sheets, and the pair of electrodes 12 and 22 facing each other through the opening 31 formed in the spacer portion. Furthermore, a part of the insulation sheets 11 and 21 indicates a part on which at least the electrode is disposed. That is, the pressure sensitive switch SW1 is a membrane switch. Here, in the pressure sensitive switch SW1, the switch element which forms the switch is the first electrode 12, and the other switch element which forms the switch is the second electrode 22.

Meanwhile, the second sensor part 3 includes the first insulation sheet 11, the second insulation sheet 21, the spacer 30, and the cushion member 40 similarly to the first sensor part 2, and a pressure sensitive switch SW2 is formed by these members as illustrated in Fig. 1.

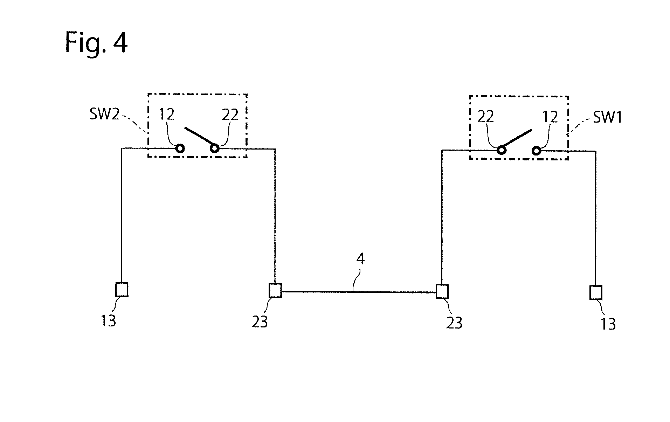

Fig. 4 is a diagram illustrating an equivalent circuit of the seat sensor 1. As illustrated in Fig. 4, the pressure sensitive switch SW1 and the pressure sensitive switch SW2 are electrically connected in series to each other through the cable 4. Further, the pressure sensitive switches SW1 and SW2 are disposed between the terminal 13 of the first sensor part 2 not connected to the cable 4 and the terminal 13 of the second sensor part 3.

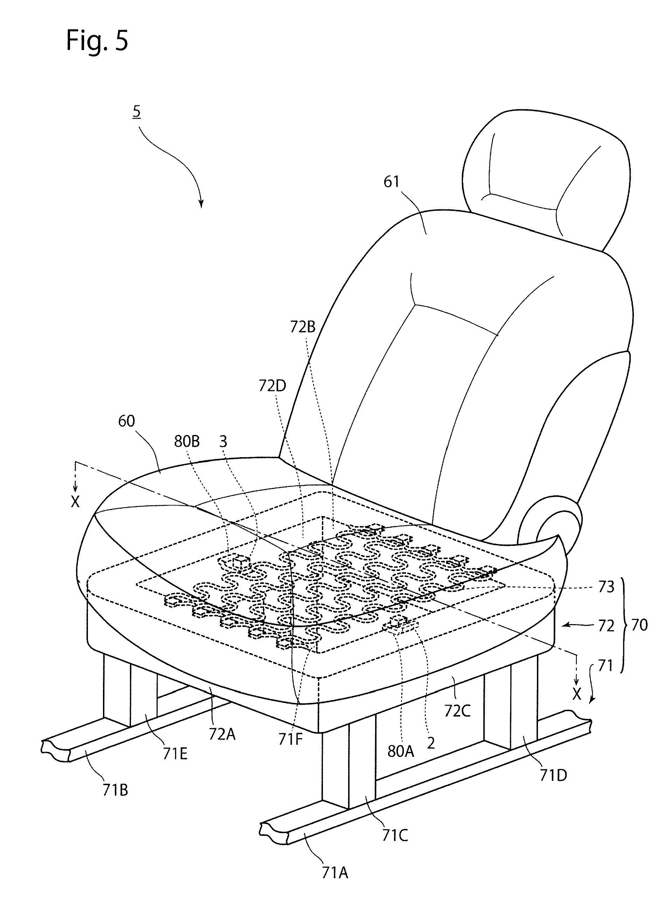

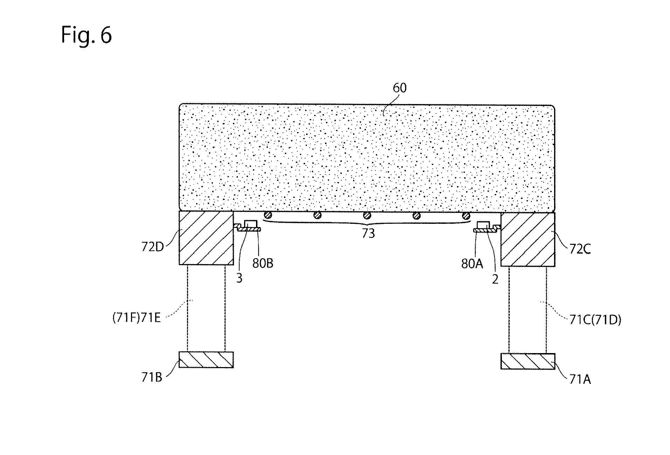

Next, the seat device 5 including the above-described seat sensor 1 will be described. Fig. 5 is a diagram illustrating a state where the seat device 5 of the first embodiment is viewed from the inclined direction, and Fig. 6 is a diagram illustrating a state of a cross-section taken along line X-X of Fig. 5. Furthermore, the position taken along line X-X is a position located at the front side of a hip point when a person sits on the seat device. The normal sitting state indicates a state where the buttocks is located at the deep position of the seat surface so that the back contacts the backrest, and the hip point indicates a portion that protrudes toward the lowest side in the buttocks in the normal sitting state.

As illustrated in Figs. 5 and 6, the seat device 5 mainly includes a cushion pad 60, a cushion placement unit 70, the above-described seat sensor 1, and a pair of sensor mounts 80A and 80B. Furthermore, in Figs. 5 and 6, the cable 4 of the seat sensor 1 is not illustrated in the drawings, and only the first sensor part 2 and the second sensor part 3 of the seat sensor 1 are illustrated.

The cushion pad 60 is a member as a seating target, and is formed as an elastic member that is deformed so as to be crushed when a pressure is applied thereto. As the material of the elastic member, urethane foam may be exemplified. In the case of the embodiment, a backrest member 61 is connected to the rear end of the cushion pad 60.

The cushion placement unit 70 includes a mount 71, a support frame 72, and a plurality of springs 73. The mount 71 is a base member as a base supporting the cushion pad 60, and has rigidity equal to or larger than a degree in which the mount is not deformed by the pressure applied to the cushion pad 60 caused when the person sits on the seat device.

In the case of the embodiment, the mount 71 includes a left base leg portion 71A and a right base leg portion 71B which are disposed in parallel, a left front leg portion 71C and a left rear leg portion 71D which are uprightly formed in the left base leg portion 71A, and a right front leg portion 71E and a right rear leg portion 71F which are uprightly formed in the right base leg portion 71B. As the materials of the leg portions 71A to 71F, for example, metal or ceramic may be exemplified.

The support frame 72 is a frame member that supports the plurality of springs 73, and is fixed to the mount 71. Further, the support frame 72 has rigidity equal to or larger than a degree in which the support frame is not deformed by the pressure applied to the cushion pad 60 caused when the person sits on the seat device similarly to the mount 71.

In the case of the embodiment, the support frame 72 includes a front frame 72A, a rear frame 72B, a left frame 72C, and a right frame 72D, and the frames 72A to 72D are respectively fixed to the upper ends of the left front leg portion 71C, the left rear leg portion 71D, the right front leg portion 71E, and the right rear leg portion 71F.

As the materials of the frames 72A to 72D, for example, metal or ceramic may be exemplified. Furthermore, the materials of the frames 72A to 72D may be the same as or different from the materials of the leg portions 71A to 71F. Further, the frames 72A to 72D may be integrated with the leg portions 71A to 71F.

The plurality of springs 73 are members on which the cushion pad 60 is placed, and are stretched over the opening of the support frame 72.

In the case of the embodiment, each spring 73 is formed as a metallic member that is repeatedly curved in an S-shape on the same plane, and the cross-sectional shape is, for example, circular. Further, the front ends of the springs 73 are attached to the front frame 72A, and the rear ends thereof are attached to the rear frame 72B. In this way, the plurality of springs 73 are formed as the mat of the cushion pad 60 while being stretched at a predetermined interval on the opening surface of the upper end of the support frame 72 in the front to back direction of the cushion pad 60.

The sensor mounts 80A and 80B are members that place the pressure sensitive switch part of the seat sensor 1 thereon. Here, the first sensor part 2 is placed on one sensor mount 80A, and the second sensor part 3 is placed on the other sensor mount 80B.

In the case of the embodiment, the sensor mounts 80A and 80B have rigidity equal to or larger than a degree in which the sensor mounts are not deformed by the pressure applied to the cushion pad 60 when the person sits on the seat device. For example, the sensor mounts are formed in a plate shape having the same shape and size.

One end of the sensor mount 80A is fixed to the left frame 72C and one end of the sensor mount 80B is fixed to the right frame 72D. Further, the other ends of the sensor mounts 80A and 80B are located below the spring bottoms while facing each other at a predetermined distance therebetween.

The first sensor part 2 placed on the sensor mount 80A and the sensor part 3 placed on the sensor mount 80B are disposed so as to be bilaterally symmetrical to each other about the center in the width direction of the cushion pad 60. Further, the pressure sensitive switch SW1 of the first sensor part 2 and the pressure sensitive switch SW2 of the sensor part 3 are disposed below the springs 73 while having a gap with respect to the lower surface of the cushion pad.

The arrangement positions of the pressure sensitive switches SW1 and SW2 are set to the positions overlapping the opening of the support frame 72 in the vertical direction of the opening. That is, the opening of the support frame 72 and the pressure sensitive switches SW1 and SW2 are disposed in an overlapping state in the up and down direction. Further, the arrangement positions of the pressure sensitive switches SW1 and SW2 are set to the positions of overlapping the springs 73 in the vertical direction of the springs 73. That is, the springs 73 and the pressure sensitive switches SW1 and SW2 do not overlap one another in the up and down direction. In addition, the arrangement positions of the pressure sensitive switches SW1 and SW2 are set to the outside of the outermost spring 73 of the plurality of springs 73.

As the materials of the sensor mounts 80A and 80B, for example, metal or ceramic may be exemplified. Furthermore, the materials of the sensor mounts 80A and 80B may be the same as or different from that of the mount 71 or the support frame 72.

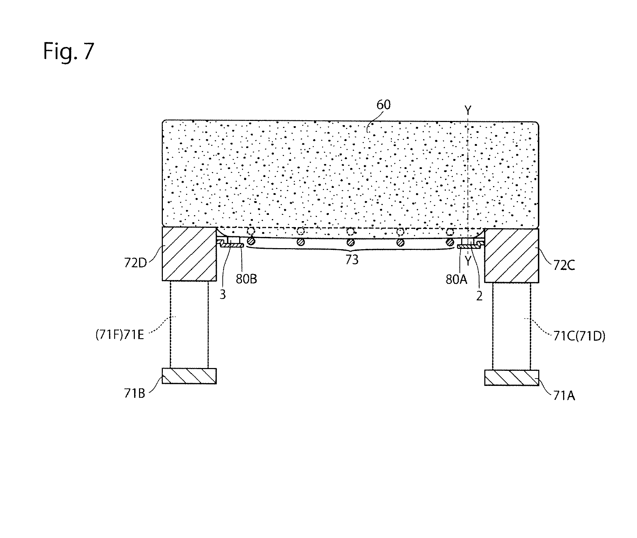

Fig. 7 is a diagram illustrating a state where the person sits on the seat device 5 of the first embodiment when viewed from the same viewing point as Fig. 6. As illustrated in Fig. 7, when the person sits on the cushion pad 60, a pressure is applied from the seat surface of the cushion pad 60.

The pressure is transmitted to the lower side of the cushion pad 60, and the cushion pad and the spring are displaced so as to be collapsed as a whole. Accordingly, the lower surface of the cushion pad and the bottom of the spring are lowered from a position (indicated by the dashed line) when the person does not sit on the seat device.

In the case of the embodiment, the pressure sensitive switches SW1 and SW2 which are placed on the sensor mounts 80A and 80B are disposed so as to be bilaterally symmetrical to each other about the center in the width direction of the cushion pad 60. For this reason, the pressure which is applied from the cushion pad 60 may be substantially equally transmitted to the pressure sensitive switches SW1 and SW2.

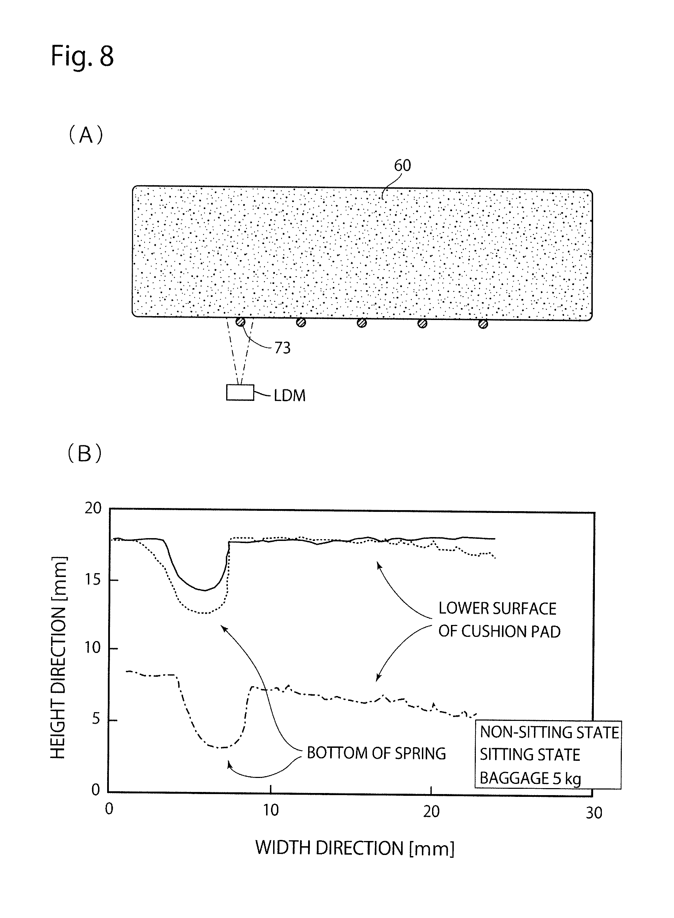

Figs. 8(A) and 8(B) are diagrams illustrating a displacement measurement state and a displacement measurement result in the lower surface of the cushion pad and the bottom of the spring when the person sits on the cushion pad 60. Specifically, Fig. 8(A) is a cross-sectional view illustrating a measurement state of a displacement in the lower surface of the cushion pad and the bottom of the spring, and Fig. 8(B) is a graph illustrating a displacement amount in the lower surface of the cushion pad and the bottom of the spring.

As illustrated in Fig. 8(A), the displacement of the lower surface of the cushion pad and the bottom of the spring was measured by a laser displacement sensor LDM disposed at the front side of the hip point and the lower side of the bottom of the spring.

As illustrated in Fig. 8(B), when the person sits on the cushion pad 60, the lower surface of the cushion pad and the bottom of the spring are largely displaced across the ends of the cushion pad 60 in the right and left direction compared to the case where a baggage is loaded on the cushion pad 60.

Furthermore, in the horizontal axis of Fig. 8(B), the location approaches the center portion in the right and left direction (the width direction) of the cushion pad 60 as it goes toward the right side of the drawing, and the location approaches the end in the right and left direction of the cushion pad 60 as it goes toward the left side of the drawing.

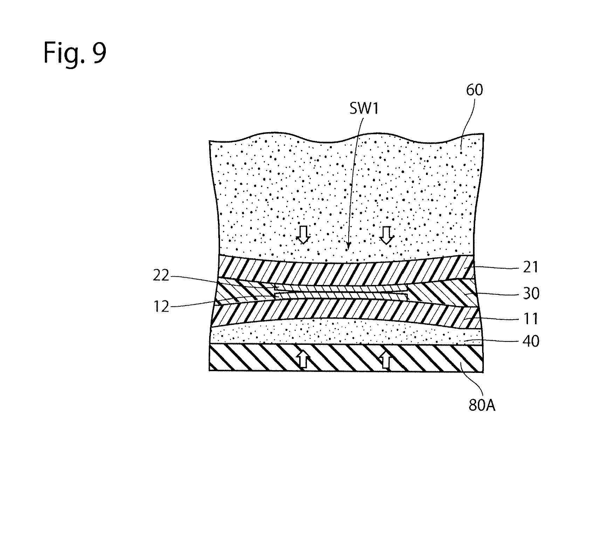

Fig. 9 is a diagram illustrating a state where the pressure sensitive switch SW1 is turned on when viewed from the cross-section taken along line Y-Y of Fig. 7. As illustrated in Fig. 9, when the person sits on the cushion pad 60 of the seat device 5 of the embodiment, the pressure is applied from both the cushion pad and the sensor mount to the pressure sensitive switch SW1 (see the arrows).

In the cushion pad, the lower surface of the cushion pad is bent, and the second insulation sheet 21 of the pressure sensitive switch SW1 is pressed downward.

Meanwhile, since the sensor mount has rigidity equal to or larger than a degree in which the sensor mount is not deformed by the pressure applied to the cushion pad 60 caused when the person sits on the sensor mount 80A, the sensor mount is not bent. However, since the cushion member 40 may be stuck to the lower side of the first insulation sheet 11 of the pressure sensitive switch SW1, the cushion member 40 is bent regardless of the degree of the rigidity of the sensor mount 80 so that the first insulation sheet 11 is pressed upward.

Since the first insulation sheet 11 and the second insulation sheet 21 which are pressed in this way are flexible, the first and second insulation sheets are bent so as to enter the opening 31 of the spacer 30. When the first and second insulation sheets are bent in this way, the first electrode 12 and the second electrode 22 which face each other through the opening 31 contact each other at a predetermined pressure. In this way, the pressure sensitive switch SW1 is turned on.

Furthermore, the pressing amount of the first insulation sheet 11 may be adjusted by the thickness or the material of the cushion member 40. For this reason, the contact pressure of the first electrode 12 and the second electrode 22 in the pressure sensitive switch SW1 may be adjusted by the cushion member 40, and hence the sensitivity of the pressure sensitive switch SW1 may be adjusted.

Further, the slit 32 (Fig. 2) which causes the opening to communicate with the outside is formed in the opening 31 of the spacer 30 sandwiched between the first electrode 12 and the second electrode 22.

For this reason, when the second insulation sheet 21 is bent, the air of the opening 31 is discharged through the slit 32 without remaining inside the opening. That is, it is possible to prevent a problem in which the bending of the first insulation sheet 11 and the second insulation sheet 21 is suppressed by the air inside the opening 31. Accordingly, the first electrode 12 and the second electrode 22 easily contact each other compared to the case where the slit 32 is not formed, and hence the sensitivity of the pressure sensitive switch SW1 may be improved.

The above-described operation of turning on the pressure sensitive switch SW1 is the same as that of the other pressure sensitive switch SW2.

In the case of the embodiment, since the pressure sensitive switch SW1 and the pressure sensitive switch SW2 are connected in series to each other, both pressure sensitive switches are electrically connected to the electronic component of the vehicle when both pressure sensitive switches are turned on, and hence the sitting state is detected.

As described above, the seat device 5 of the embodiment includes the support frame 72 having rigidity equal to or larger than a degree in which the support frame is not deformed by the pressure applied to the cushion pad 60 caused when the person sits on the seat device. Then, the first sensor part 2 including the pressure sensitive switch SW1 is supported through the sensor mount 80A fixed to the support frame 72.

In such a seat device 5, the support frame 72 is not deformed even when the cushion pad 60 is displaced as illustrated in Fig. 7. For this reason, the position of the pressure sensitive switch SW1 of the first sensor part 2 which is supported by the support frame 72 through the sensor mount 80 is not displaced even when the cushion pad 60 is displaced.

Incidentally, the cushion pad 60 is not substantially displaced when an article is placed on the cushion pad 60, but is largely displaced when the person sits on the cushion pad 60.

As illustrated in Figs. 5 and 6, the first sensor part 2 including the pressure sensitive switch SW1 is disposed below the cushion pad 60 having such a displacement while having a gap with respect to the lower surface of the cushion pad.

Accordingly, when the article is placed on the cushion pad 60, the cushion pad 60 is not substantially displaced. Thus, it is possible to suppress an erroneous detection occurring when the pressure sensitive switch SW1 is turned on due to the article. Meanwhile, when the person sits on the cushion pad, the front cushion pad 60 is largely displaced from the hip point as illustrated in Fig. 8(A). Accordingly, the relative position between the cushion pad 60 and the pressure sensitive switch SW1 changes, and the pressure sensitive switch SW1 and the cushion pad 60 contact each other, so that the pressure sensitive switch SW1 is turned on. In this way, it is possible to provide the seat device 5 capable of appropriately detecting the sitting state.

Further, in the case of the embodiment, the first electrode 12 as one switch element forming the pressure sensitive switch SW1 and the second electrode 22 as the other switch element forming the pressure sensitive switch SW1 face each other in the up and down direction (see Fig. 9 and the like).

That is, the first electrode 12 and the second electrode 22 forming the pressure sensitive switch SW1 are disposed in the displacement direction of the cushion pad 60. Accordingly, there is no need to provide a member that changes the displacement of the cushion pad 60 in the direction in which the electrodes face each other compared to the case where the first electrode 12 and the second electrode 22 are aligned to the direction (the front to back direction or the right and left direction) perpendicular to the direction (the up and down direction) in which the cushion pad 60 displaces. For this reason, the seat device 5 may directly distinguish the person and the article from each other.

Furthermore, in the embodiment, the first electrode 12 as one switch element and the second electrode 22 as the other switch element forming the pressure sensitive switch SW1 are formed in a plate shape, and face each other in parallel. However, if a part of one switch element and the other switch element face each other in at least the up and down direction, the switch elements may be formed in a shape other than the plate shape, and the switch elements do not need to be parallel to each other. In other words, when one switch element and the other switch element are viewed from the top side in the up and down direction, at least a part of the switch elements may overlap each other.

Further, in the case of the embodiment, the pressure sensitive switch SW1 is disposed so as to face the lower surface of the cushion pad. That is, the pressure sensitive switch SW1 is substantially disposed in parallel to the lower surface of the cushion pad. For this reason, when the cushion pad 60 is displaced so as to be collapsed, it is possible to largely ensure a portion in which the pressure sensitive switch SW1 contacts the lower surface of the cushion pad, and hence to more accurately distinguish the person and the article from each other.

Further, in the case of the embodiment, the pressure sensitive switch SW1 is disposed below the plurality of springs 73 as illustrated in Figs. 5 and 6.

For this reason, it is possible to suppress an erroneous detection occurring when the pressure sensitive switch SW1 is turned on while being pressed by the cushion pad 60 when an article lighter than the person is placed on the seat device compared to the case where the pressure sensitive switch SW1 is not disposed below the plurality of springs 73.

Further, in the case of the embodiment, the pressure sensitive switch SW1 is disposed at the position not overlapping the spring 73 in the vertical directions of the springs 73 as illustrated in Figs. 5 and 6.

For this reason, it is possible to prevent the pressure sensitive switch SW1 from being pressed by the spring 73 having rigidity larger than the cushion pad 60, and hence to improve the durability of the pressure sensitive switch SW1.

Further, in the case of the embodiment, the first sensor part 2 is disposed in the vicinity of the support frame inside the opening of the support frame 72 as illustrated in Figs. 5 and 6.

For this reason, it is possible to easily ensure the arrangement space of the electronic component to be disposed below the cushion pad 60 compared to the case where the first sensor part 2 is disposed at the center area inside the opening of the support frame 72. Further, when the person sits on the seat device, the front cushion pad 60 is displaced from the hip point so as to be collapsed as a whole as illustrated in Fig. 7. For this reason, even when the first sensor part 2 is disposed near the support frame in the opening of the support frame 72, the pressure is applied from the cushion pad 60 to the first sensor part 2 similarly to the case where the first sensor part is disposed in the center area inside the opening. Accordingly, it is possible to appropriately detect a state where the person sits on the seat device while ensuring the arrangement space of the electronic component to be disposed below the cushion pad 60.

Further, in the case of the embodiment, the pressure sensitive switch SW1 is disposed at the outside of the outermost spring 73 of the plurality of springs 73 as illustrated in Figs. 5 and 6.

For this reason, it is possible to improve the durability of the pressure sensitive switch SW1 by preventing the pressure sensitive switch SW1 from being pressed by the spring 73 having rigidity larger than the cushion pad 60 as described above. Further, since the pressure sensitive switch is disposed at the outside of the outermost spring, it is easy to ensure the arrangement space of the electronic component to be disposed below the cushion pad 60.

Further, in the case of the embodiment, the first sensor part 2 including the pressure sensitive switch SW1 and the second sensor part 3 including the pressure sensitive switch SW2 are supported in a bilaterally symmetrical state through the pair of sensor mounts 80A and 80B as illustrated in Figs. 5 and 6. Then, the pressure sensitive switches SW1 and SW2 are electrically connected in series to each other.

For this reason, it is possible to prevent both the pressure sensitive switches SW1 and SW2 from being turned on even when a baggage is placed at the right side or the left side of the cushion pad 60, and hence to more appropriately detect the sitting state.

### (2) Second Embodiment

Next, a second preferred embodiment of the invention will be described in detail with reference to the drawings. Here, the same reference sign will be given to the same or equivalent component as or to that of the first embodiment among the components of the seat device of the second embodiment, and the repetitive description thereof will be appropriately omitted.

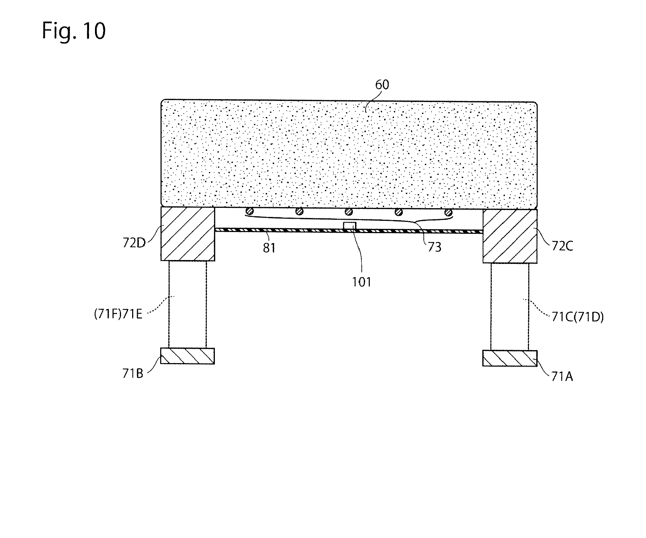

Fig. 10 is a diagram illustrating the seat device of the second embodiment when viewed from the same viewing point as Fig. 6. As illustrated in Fig. 10, the seat device of the embodiment is different from the seat device 5 of the first embodiment in that a seat sensor 101 is provided instead of the seat sensor 1 of the first embodiment and a sensor mount 81 is provided instead of the sensor mounts 80A and 80B of the first embodiment.

Specifically, the seat sensor 1 of the first embodiment has a configuration in which the first sensor part 2 and the sensor part 3 are electrically connected to each other through the cable 4 as illustrated in Fig. 1. Further, the pressure sensitive switches SW1 and SW2 of the first sensor parts 2 and 3 are disposed near the right and left ends of the cushion pad 60 at the lower side of the bottom of the spring.

On the contrary, the seat sensor 101 of the embodiment includes only the first sensor part 2 of the seat sensor 1 as illustrated in Fig. 10. Further, the pressure sensitive switch SW1 of the first sensor part 2 is disposed at the center in the right and left direction of the cushion pad 60 below the bottom of the spring. Furthermore, the terminals 13 and 23 (Fig. 2) of the seat sensor 101 (the first sensor part 2) of the embodiment are electrically connected to a pair of terminals of the electric component of the vehicle through an interconnection wire (not illustrated).

Meanwhile, the sensor mounts 80A and 80B of the first embodiment have rigidity equal to or larger than a degree in which the sensor mounts are not deformed by the pressure applied to the cushion pad 60 caused when the person sits on the seat device. Further, as illustrated in Fig. 6, one end of each of the sensor mounts 80A and 80B is fixed to the support frame 72 and the other end thereof is located below the bottom of the spring.

On the contrary, the sensor mount 81 of the embodiment has elasticity in the displacement direction of the cushion pad 60. Further, as illustrated in Fig. 10, the sensor mount 81 is disposed below the bottom of the spring. Here, one end of the sensor mount is fixed to a left frame 72C of the support frame 72 and the other end thereof is fixed to the right frame 72D of the support frame 72 so that a space is formed below the sensor mount 81.

The shape of the sensor mount 81 is a plate shape in Fig. 10, but is not particularly limited. For example, various shapes may be employed. Furthermore, a shape having a flat surface is desirable from the viewpoint of the placement of the seat sensor 101. Further, the material of the sensor mount 81 is not particularly limited as long as the elasticity is ensured in the displacement direction of the cushion pad 60. For example, metal or rubber may be exemplified.

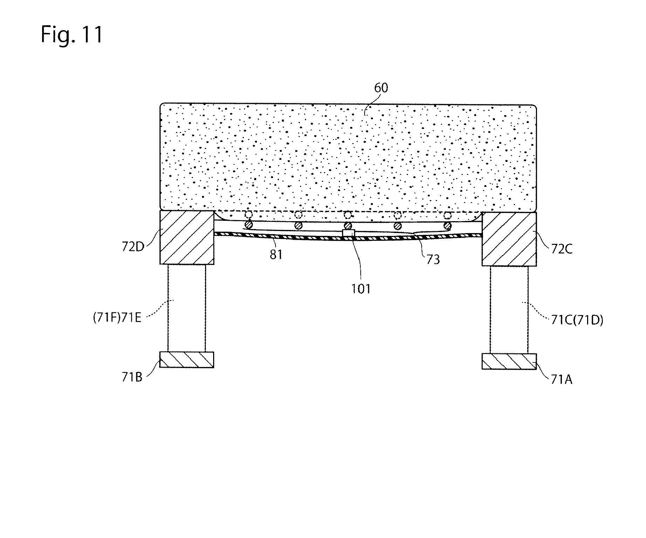

Fig. 11 is a diagram illustrating a state where the person sits on the seat device of the second embodiment when viewed from the same viewing point as Fig. 6. As illustrated in Fig. 11, when the person sits on the cushion pad 60, the lower surface of the cushion pad and the bottom of the spring are displaced so as to be collapsed as a whole based on the vertical direction of the buttocks in the right and left direction of the front cushion pad 60 from the hip point, and is lowered from the position (indicated by the dashed line) when the person does not sit on the seat device.

The seat sensor 101 is pressed by such a displacement, but the sensor mount 81 for placing the seat sensor 101 thereon has elasticity in the displacement direction of the cushion pad 60. Accordingly, a space is formed below the sensor mount 81. For this reason, when a predetermined pressure or more is applied to the seat sensor 101, the sensor mount 81 for placing the seat sensor 101 thereon moves so as to be collapsed downward.

As described above, in the seat device 5 of the embodiment, the sensor mount 81 for placing the seat sensor 101 thereon has elasticity in the displacement direction of the cushion pad 60, and a space is formed below the sensor mount 81.

For this reason, the sensor mount may move in a direction in which the pressure is applied from the cushion pad 60 after the pressure sensitive switch SW1 is turned on in response to the pressure applied from the cushion pad 60 caused when the person sits on the seat device. That is, the sensor mount moves in a direction in which the pressure is applied from the cushion pad 60 after the pressure sensitive switch SW1 is turned on in response to the pressure applied from the cushion pad 60, and hence the sensor mount does not move in synchronization with the displacement of the cushion pad 60 caused when the person sits on the seat device. In this way, when the sensor mount 81 is adapted to move in the direction in which the pressure is applied from the cushion pad 60 after the pressure sensitive switch SW1 is turned on in response to the pressure applied from the cushion pad 60, it is possible to prevent an excessive pressure from being applied to the switch and hence to improve the durability of the switch.

### (3) Third Embodiment

Next, a third preferred embodiment of the invention will be described in detail with reference to the drawings. Here, the same reference sign will be given to the same or equivalent component as or to that of the above-described embodiment among the components of the seat device of the third embodiment, and the repetitive description thereof will be appropriately omitted.

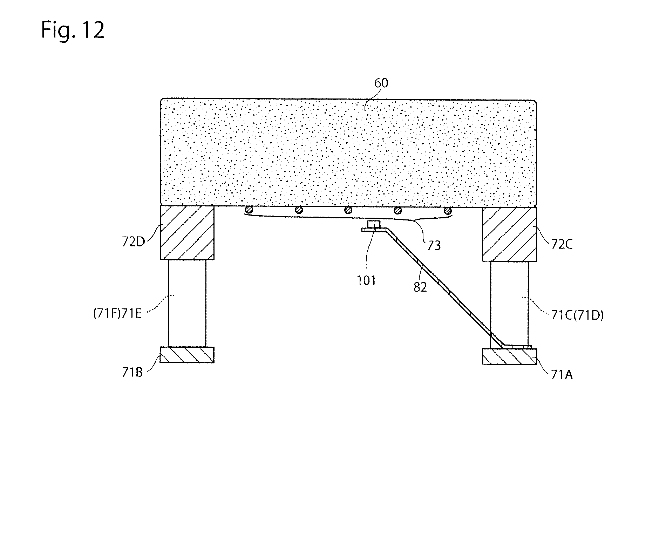

Fig. 12 is a diagram illustrating the seat device of the third embodiment when viewed from the same viewing point as Fig. 6. As illustrated in Fig. 12, the seat device of the embodiment is different from the seat device 5 of the first embodiment in that the seat sensor 101 of the second embodiment is provided instead of the seat sensor 1 of the first embodiment and a sensor mount 82 is provided instead of the sensor mounts 80A and 80B of the first embodiment.

Similarly to the sensor mounts 80A and 80B, the sensor mount 82 has rigidity equal to or larger than a degree in which the sensor mount is not deformed by the pressure applied to the cushion pad 60 caused when the person sits on the seat device, and one end of the sensor mount 82 as the fixed end is fixed to, for example, the left base leg portion 71A of the mount 71.

Meanwhile, the other end of the sensor mount 82 is located below the bottom of the spring. Then, the seat sensor 101 is placed at the position not overlapping the spring 73 in the downward vertical directions of the springs 73 in the top surface of the sensor mount 82.

The shape of the sensor mount 82 is a plate shape in Fig. 12, but is not particularly limited. For example, various shapes may be employed. Furthermore, a shape having a flat surface is desirable from the viewpoint of the placement of the seat sensor 101.

Further, as the material of the sensor mount 82, for example, metal or ceramic may be exemplified similarly to the mount 71 and the support frame 72 of the first embodiment. Furthermore, the material of the sensor mount 82 may be the same as or different from that of the mount 71 or the support frame 72.

Even when such a sensor mount 82 is employed, the same effect as that of the first embodiment may be obtained. Furthermore, in many cases, the electronic component of the vehicle is disposed below the cushion pad 60. Accordingly, the first embodiment is more advantageous from the viewpoint that the seat sensor is disposed below the spring 73 while ensuring the arrangement space of the article.

### (4) Fourth Embodiment

Next, a fourth preferred embodiment of the invention will be described in detail with reference to the drawings. Here, the same reference sign will be given to the same or equivalent component as or to that of the above-described embodiment among the components of the seat device of the fourth embodiment, and the repetitive description thereof will be appropriately omitted.

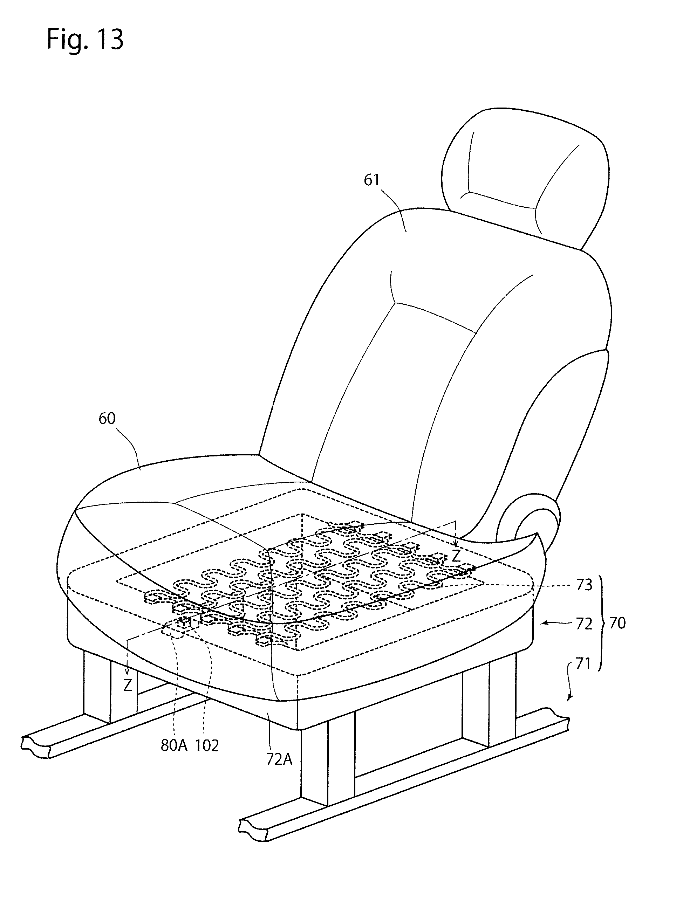

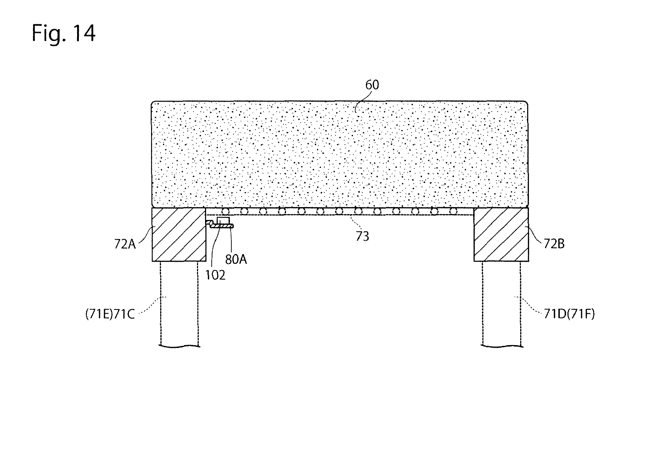

Fig. 13 is a diagram illustrating the seat device of the fourth embodiment when viewed from the same viewing point as Fig. 5, and Fig. 14 is a diagram illustrating a state of a cross-section taken along line Z-Z of Fig. 13.

As illustrated in FIGS. 13 and 14, the seat device of the embodiment is different from the seat device of the first embodiment in that a seat sensor 102 is provided instead of the seat sensor 1 of the first embodiment.

The seat sensor 102 includes only the first sensor part 2 of the seat sensor 1. Furthermore, the terminals 13 and 23 (Fig. 2) of the seat sensor 102 (the first sensor part 2) of the embodiment are electrically connected to a pair of terminals of the electric component of the vehicle through an interconnection wire (not illustrated). The seat sensor 102 is supported by the front frame 72A through the sensor mount 80A fixed to the front frame 72A, and is disposed near the front frame inside the opening of a support frame 72.

The seat sensor 102 which is disposed near the front frame is disposed at the position overlapping the opening in the vertical direction of the opening of the support frame 72. That is, the opening of the support frame 72 and the seat sensor 102 overlap each other in the up and down direction. Further, the seat sensor 102 which is disposed near the front frame is disposed at the position not overlapping the springs 73 in the vertical directions of the springs 73. That is, the springs 73 do not overlap the seat sensor 102 in the up and down direction.

When the seat sensor 102 disposed in this way is employed, it is possible to easily ensure the arrangement space of the electronic component to be disposed below a cushion pad 60 compared to the case where the seat sensor 102 is disposed at the center area of the opening of the support frame 72.

Further, when the person sits on the seat device, the front cushion pad 60 is displaced so as to be collapsed as a whole from the hip point. For this reason, even when the seat sensor 102 is disposed near the support frame in the opening of the support frame 72 at the front side from the hip point, the pressure may be applied from the cushion pad 60 to the seat sensor 102 similarly to the case where the seat sensor is disposed at the center area of the opening. Accordingly, it is possible to appropriately detect a state where the person sits on the seat device while ensuring the arrangement space of the electronic component to be disposed below the cushion pad 60.

### (5) Fifth Embodiment

Next, a fifth preferred embodiment of the invention will be described in detail with reference to the drawings. Here, the same reference sign will be given to the same or equivalent component as or to that of the above-described embodiment among the components of the seat device of the fifth embodiment, and the repetitive description thereof will be appropriately omitted.

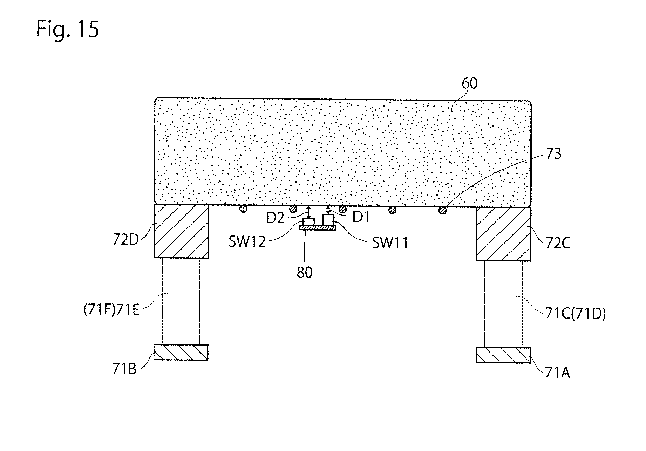

Fig. 15 is a diagram illustrating the seat device of the fifth embodiment when viewed from the same viewing point as Fig. 6. As illustrated in Fig. 15, the seat device of the embodiment is different from the fourth embodiment in which one pressure sensitive switch SW1 is disposed in the sensor mount 80A in that two pressure sensitive switches SW11 and SW12 are disposed at the sensor mount 80A of the fourth embodiment.

Furthermore, each of the pressure sensitive switches SW11 and SW12 may be configured as one membrane switch. Similarly to the first embodiment, the membrane switch including the pressure sensitive switch SW11 and the membrane switch including the pressure sensitive switch SW12 may be connected to each other through the cable.

In the seat device of the embodiment, the first pressure sensitive switch SW11 and the second pressure sensitive switch SW12 are disposed adjacently so as to receive substantially the same pressure from the lower surface of the cushion pad.

That is, the first pressure sensitive switch SW11 and the second pressure sensitive switch SW12 are disposed below the spring 73 in the vertical direction of an area in which a load difference with respect to an interested portion in the lower surface of the cushion pad becomes 20% or less in consideration of the relation of the load applied to the lower surface of the cushion pad.

Further, the first pressure sensitive switch SW11 and the second pressure sensitive switch SW12 are disposed in parallel in a non-contact state on the line perpendicular to the center axis of the spring 73 between the springs 73 in consideration of the relation of the adjacent springs 73. Further, the first pressure sensitive switch SW11 and the second pressure sensitive switch SW12 are disposed at an interval equal to or larger than a value five times the diameter of the opening 31 in consideration of the relation with respect to the opening 31 (Fig. 2) of the pressure sensitive switch.

Incidentally, in the seat device of the embodiment, the shortest distance D1 from the lower surface of the cushion pad to the first pressure sensitive switch SW11 is smaller than the shortest distance D2 from the lower surface of the cushion pad to the second pressure sensitive switch SW12.

Furthermore, the shortest distance D1 or D2 may be called as the straight distance from the lower surface of the cushion pad facing the vertical direction of the lower surface of the cushion pad to the first pressure sensitive switch SW1 or the second pressure sensitive switch SW2.

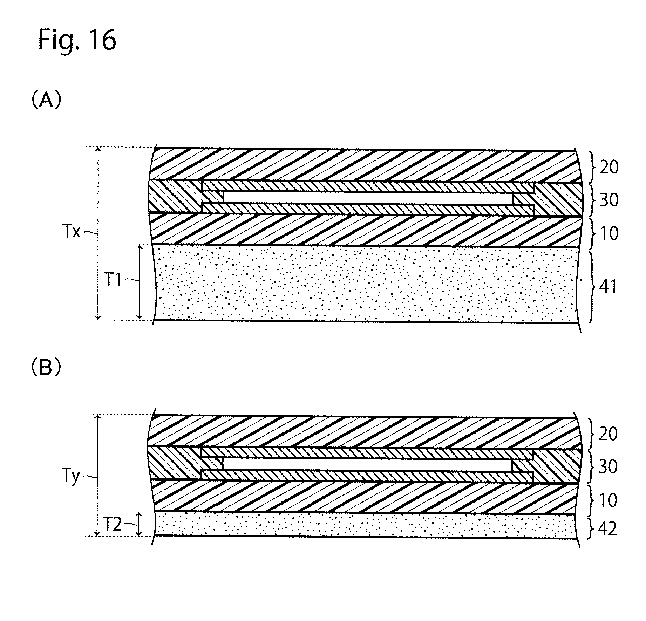

Figs. 16(A) and 16(B) are diagrams illustrating the cross-sections of the first pressure sensitive switch SW11 and the second pressure sensitive switch SW12 when viewed from the same viewing point as Fig. 3. Specifically, Fig. 16(A) illustrates the cross-section of the first pressure sensitive switch SW11, and Fig. 16(B) illustrates the cross-section of the second pressure sensitive switch SW12.

As illustrated in Figs. 16(A) and 16(B), the thickness T1 of a cushion member 41 forming the first pressure sensitive switch SW11 is larger than the thickness T2 of a cushion member 42 forming the second pressure sensitive switch SW12. With such a relation, the shortest distance D1 is smaller than the shortest distance D2.

Furthermore, when the sensitivity of the first pressure sensitive switch SW11 is substantially different from the sensitivity of the second pressure sensitive switch SW12 due to a difference in thickness between the cushion member 41 and the cushion member 42, the hardness of the cushion member 41 or 42 is appropriately adjusted.

The sensitivity is a pressure sensing degree, and indicates the degree of the easiness of the contact between one switch element (in the embodiment, the first electrode 12) and the other switch element (in the embodiment, the second electrode 22) forming the switch.

As described above, in the seat device of the embodiment, the first pressure sensitive switch SW11 and the second pressure sensitive switch SW12 are supported through the sensor mount 80A by the support frame 72 which does not move in synchronization with the displacement of the cushion pad caused by the sitting operation. For this reason, even when the cushion pad 60 is displaced, the positions of the first pressure sensitive switch SW11 and the second pressure sensitive switch SW12 are not displaced.

Meanwhile, when the weight of the person or the like is applied from the seat surface to the cushion pad 60, the lower surface of the cushion pad and the bottom of the spring are displaced so as to be collapsed as a whole, and are lowered from the position where the person does not sit on the seat device. The displacement amount is largely different between the case where the person sits on the seat device and the case where the article lighter than the person sits on the seat device.

That is, when the person sits on the seat device, the cushion pad 60 is largely displaced downward as a whole, and the relative position with respect to the first pressure sensitive switch SW11 and the second pressure sensitive switch SW12 changes. In this case, the first pressure sensitive switch SW11 and the second pressure sensitive switch SW12 are turned on while being pressed by the cushion pad 60. Meanwhile, when the article is placed on the cushion pad, the cushion pad 60 is not substantially displaced, and the change amount of the relative position with respect to the first pressure sensitive switch SW11 and the second pressure sensitive switch SW12 is small. For this reason, it is possible to suppress an erroneous detection occurring when the first pressure sensitive switch SW11 and the second pressure sensitive switch SW12 are turned on due to the article. Accordingly, it is possible to distinguish the person and the article from each other.

Furthermore, in the seat device of the embodiment, the first pressure sensitive switch SW11 and the second pressure sensitive switch SW12 are disposed adjacently below the cushion pad while having a gap with respect to the lower surface of the cushion pad. Further, the shortest distance D1 is smaller than the shortest distance D2.

For this reason, the different weights applied to the cushion pad 60 may be obtained as two patterns as the case where only the first pressure sensitive switch SW11 is turned on and the case where both the first pressure sensitive switch SW11 and the second pressure sensitive switch SW12 are turned on. Accordingly, it is possible to distinguish the persons having different body weights.

### (6) Other Embodiments

As described above, the first to fifth embodiments have been described as examples. However, the invention is not limited to the first to fifth embodiments.

For example, in the fifth embodiment, since the thickness of the cushion member 41 forming the first pressure sensitive switch SW11 is larger than the thickness of the cushion member 42 forming the second pressure sensitive switch SW12, the shortest distance D1 is smaller than the shortest distance D2.

However, the method of setting the shortest distance D1 to be smaller than the shortest distance D2 is not limited to the method of causing the cushion member 41 and the cushion member 42 to have different thicknesses. For example, in the thickness of any one or more of the first insulation sheet 11, the second insulation sheet 21, the first electrode 12, the second electrode 22, and the spacer 30, the thickness at the first pressure sensitive switch SW1 may be larger than that of the second pressure sensitive switch SW2 instead of the cushion members 41 and 42 or in addition to the cushion members 41 and 42. That is, the thickness Tx (Fig. 16(A)) of the first pressure sensitive switch SW11 may be larger than the thickness Ty (Fig. 16(B)) of the second pressure sensitive switch SW12.

Further, the shortest distance D1 may be smaller than the shortest distance D2 in a manner such that the top surface of the sensor mount 80A is provided with unevenness and the surface provided with the first pressure sensitive switch SW11 is set to be lower than the surface provided with the second pressure sensitive switch SW2 among the first pressure sensitive switch SW11 and the second pressure sensitive switch SW12 having the same thickness.

Further, in the fifth embodiment, the first pressure sensitive switch SW11 and the second pressure sensitive switch SW12 have substantially the same sensitivity, and the shortest distance D1 is smaller than the shortest distance D2. However, the sensitivity of the first pressure sensitive switch SW1 may be larger than that of the second pressure sensitive switch SW2, and the shortest distances from the lower surface of the cushion pad to the pressure sensitive switches SW11 and SW12 may be equal to each other.

Furthermore, as the method of setting the sensitivity of the first pressure sensitive switch SW1 to be larger than the sensitivity of the second pressure sensitive switch SW2, for example, a method may be employed in which the opening 31 of the first pressure sensitive switch SW11 is larger than the opening 31 of the second pressure sensitive switch SW12. As a separate example, in the hardness of the first insulation sheet 11, the second insulation sheet 21, the first electrode 12, the second electrode 22, or the spacer 30, the hardness at the first pressure sensitive switch SW11 is smaller than that of the second pressure sensitive switch SW12.

Further, the slit 32 formed in the opening 31 of the second pressure sensitive switch SW12 may not be provided while the slit 32 formed in the opening 31 of the first pressure sensitive switch SW11 remains. In such a configuration, the air inside the opening is stored in the opening 31 of the second pressure sensitive switch SW12 while not being discharged to the outside, and the bending of the first insulation sheet 11 and the second insulation sheet 21 is suppressed by the air. For this reason, the sensitivity of the first pressure sensitive switch SW11 becomes higher than the sensitivity of the second pressure sensitive switch SW12. Accordingly, even when an error is found due to the size of the opening 31 in the production state, the sensitivity of the first pressure sensitive switch SW11 and the sensitivity of the second pressure sensitive switch SW12 may become easily different.

Incidentally, the sensitivity of the first pressure sensitive switch SW11 may be larger than the sensitivity of the second pressure sensitive switch SW12, and the shortest distance D1 may be smaller than the shortest distance D2. In such a configuration, it is possible to more accurately distinguish the person and the article or the persons having different body weights compared to the case where any one of the above-described relations is satisfied.

Briefly, the first pressure sensitive switch may be turned on when a first weight or more is applied from the seat surface of the cushion pad 60, and the second pressure sensitive switch may be turned on when a second weight larger than the first weight is applied from the seat surface of the cushion pad 60.

In the first embodiment, the pressure sensitive switch parts (the first sensor parts 2 and 3) of the seat sensor 1 are supported by the support frame 72 through the sensor mount 80A and the sensor mount 80B. In the second embodiment, the seat sensor 101 is supported by the support frame 72 through the sensor mount 81. In the third embodiment, the seat sensor 101 is supported by the mount 71 through the sensor mount 82. In the fourth and fifth embodiments, the seat sensor 102 is supported by the support frame 72 through the sensor mount 80A.

However, the method of supporting the pressure sensitive switch part of the seat sensor 1 and the seat sensor 101 or 102 is not limited to the above-described embodiments. For example, a configuration may be employed in which the seat sensor 101 of the second embodiment is supported through the sensor mount 80A by omitting the sensor mount 80B of the first embodiment. Further, a configuration may be employed in which a support frame is molded by integrating the support frame 72 of the first embodiment with the sensor mount 80A and the sensor mount 80B and the seat sensor is placed on the seat frame so as to be directly supported without the sensor mount. Similarly to this configuration, a configuration may be employed in which the mount is molded by integrating the mount 71 of the third embodiment with the sensor mount 82 and the seat sensor is placed on the mount so as to be directly supported without the sensor mount.

Further, as the member that directly or indirectly supports the pressure sensitive switch through the sensor mount in this way, the member is formed as the mount 71 or the support frame 72 having rigidity equal or larger than a degree in which the mount is not deformed by the pressure applied to the cushion pad 60 caused by the sitting operation in the above-described embodiment.

However, the member that supports the pressure sensitive switch part of the seat sensor 1 or the seat sensor 101 may be a member other than the mount 71 or the support frame 72, and may not essentially have rigidity equal to or larger than a degree in which the member is not deformed by the pressure applied to the cushion pad 60 caused by the sitting operation. Briefly, the same effect as those of the above-described embodiments may be obtained as long as the member does not move in synchronization with the displacement of the cushion pad 60 caused by the sitting operation.

Further, in the first embodiment, the seat sensor 1 is disposed near each of the left frame 72C and the right frame 72D in the opening surrounded by the support frame 72. In the second and third embodiments, the seat sensor 101 is disposed in the center area inside the opening surrounded by the support frame 72. In the fourth and fifth embodiments, the seat sensor 102 is disposed near the front frame 72A inside the opening surrounded by the support frame 72.

It is desirable that such an arrangement position be located at the front side of the hip point when the person normally sits on the seat device. Furthermore, the normal sitting state indicates a state where the buttocks is located at the deep position of the seat surface so that the back contacts the backrest, and the hip point indicates a portion that protrudes toward the lowest side in the buttocks in the normal sitting state as described above.

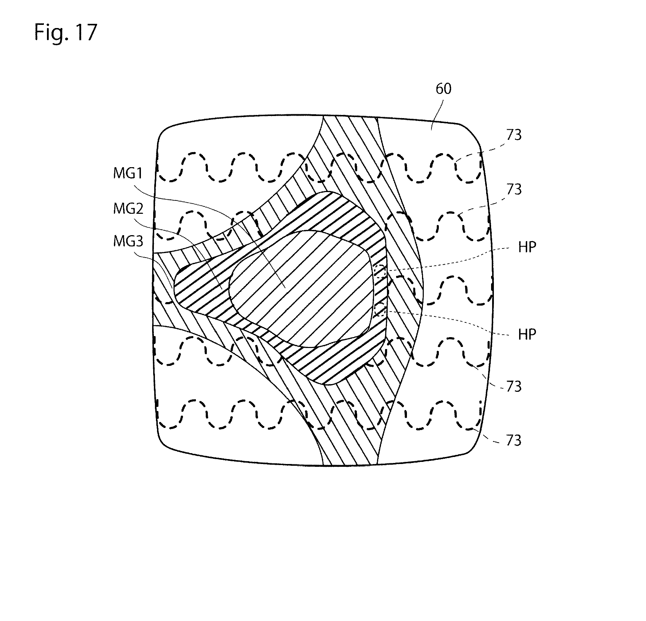

Here, Fig. 17 illustrates the distribution of the load applied to the lower surface of the cushion pad when the person normally sits on the seat device. In Fig. 17, the left side of the drawing indicates the front side of the cushion pad 60, and the right side of the drawing indicates the rear side of the cushion pad 60.

As illustrated in Fig. 17, the load which is applied to the lower surface of the cushion pad when the person normally sits on the seat device is large at the hip point HP and the front side thereof in relation to the rear side of the hip point.

Further, the distribution of the load applied to the lower surface of the cushion pad when the person normally sits on the seat device is substantially classified into three levels of a first area MG1, a second area MG2, and a third area MG3. The first area MG1 becomes an area in which the load ratio with respect to a reference portion (hereinafter, a maximum load portion) having the largest load among the load applied to the lower surface of the cushion pad when the person normally sits on the seat device is 90% or more. Meanwhile, the second area MG2 becomes an area in which the load ratio with respect to the maximum load portion is equal to or larger than 80% and is smaller than 90%. On the other hand, the third area MG3 is an area in which the load ratio with respect to the maximum load portion is equal to or larger than 10% and is smaller than 80%.

In this way, when the seat sensor 1, 101, or 102 is disposed at the front side of the hip point HP, it is possible to appropriately detect a state where the person sits on the seat device compared to the case where the seat sensor is disposed at the rear side of the hip point HP. Furthermore, since the spring 73 that supports the cushion pad 60 supports the load in the entire spring as described above, the spring is displaced downward along with the cushion pad 60 comparatively as a whole. For this reason, the seat sensor may be disposed in any area of the first area MG1 to the third area MG3 as long as the seat sensor is disposed at the front side of the hip point when the person normally sits on the seat device.

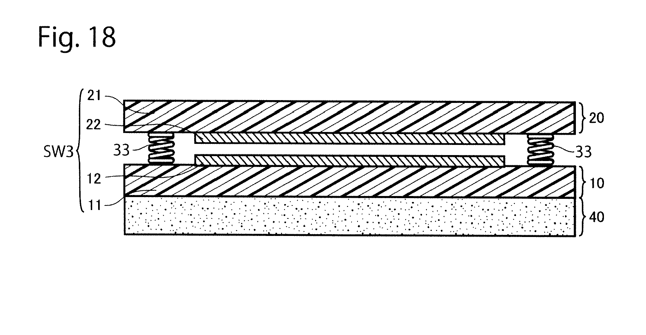

Further, in the above-described embodiment, the pressure sensitive switch SW1, SW2, SW11, or SW12 including the pair of electrode sheets 10 and 20 and the spacer 30 has been employed, but the pressure sensitive switch illustrated in, for example, Fig. 18 may be employed.

The pressure sensitive switch SW3 illustrated in Fig. 18 is different from the pressure sensitive switch SW1 only in that the spacer 30 is replaced by the plurality of springs 33. The springs 33 are disposed so as to face each other with the first electrode 12 and the second electrode 22 interposed therebetween. Here, the upper end of the spring is fixed to the second insulation sheet 11, and the lower end of the spring is fixed to the first insulation sheet 11. Even when such a pressure sensitive switch is employed, the same effect as those of above-described embodiments may be obtained. Furthermore, a pressure sensitive switch other than the pressure sensitive switches SW1 to SW3 and SW11 and SW12 may be employed.

Further, in the above-described embodiment, the pressure sensitive switch SW1, SW2, SW11, or SW12 is disposed below the bottom of the spring, but the pressure sensitive switch may not be disposed below the bottom of the spring as long as the pressure sensitive switch is disposed below the cushion pad 60 with a large gap with respect to the lower surface of the cushion pad.

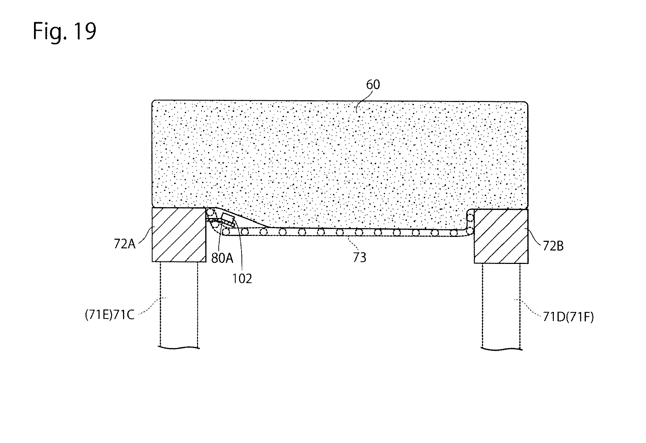

Specifically, an embodiment illustrated in, for example, Fig. 19 may be employed. Fig. 19 is a diagram illustrating a state of the seat device when viewed from the same viewing point as Fig. 14. As illustrated in Fig. 19, in the seat device, the cushion pad 60 is molded in a shape other than the first to fifth embodiments. That is, the lower surface of the cushion pad is substantially flat in the first to fifth embodiments, but is not flat in the embodiment. Specifically, the front end of the lower surface of the cushion pad is inclined so as to descend toward the center portion, and the inclined surface is substantially flat.

Meanwhile, the seat sensor 102 is supported by the front frame 72A through the sensor mount 80A while facing the inclined surface with a gap with respect to the inclined surface. Furthermore, at least a part of one switch element and the other switch element forming the pressure sensitive switch SW1 in the seat sensor 102 overlaps each other when the switch element is viewed from the top side in the up and down direction. That is, the shape of the switch element may be any shape or may not be parallel as long as at least a part of one switch element and the other switch element face each other in the up and down direction as described above.

In this way, even in the embodiment in which the pressure sensitive switch is disposed above the bottom of the spring, it is possible to directly and accurately distinguish the person and the article similarly to the above-described embodiments.

Furthermore, in the embodiment illustrated in Fig. 19, the pressure sensitive switch SW1 that forms the seat sensor 102 is disposed so as to face the lower surface of the cushion pad. That is, the pressure sensitive switch SW1 is disposed so as to be substantially parallel to the lower surface of the cushion pad. For this reason, when the cushion pad 60 is displaced so as to be collapsed, it is possible to ensure the larger portion in which the pressure sensitive switch SW1 contacts the lower surface of the cushion pad, and hence to more accurately distinguish the person and the article from each other.

Further, in the first to fourth embodiments, the number of the pressure sensitive switches of the first sensor parts 2 and 3 of the seat sensor 1 or the number of the pressure sensitive switches of the seat sensors 101 and 102 is one. Further, in the fifth embodiment, the number of the pressure sensitive switches of the seat sensor 102 is two. However, the number of the pressure sensitive switches of the first sensor parts 2 and 3 of the seat sensor 1 or the number of the pressure sensitive switches of the seat sensors 101 and 102 may be set to various numbers of one or two or more.

Furthermore, when the number of the pressure sensitive switches is two or more, the number of the pressure sensitive switches of the first sensor part 2 may be different from the number of the pressure sensitive switches of the sensor part 3.

Further, when the number of the pressure sensitive switches is two or more, the openings of the pressure sensitive switches may be different from each other. In such a configuration, the insulation sheet of the pressure sensitive switch having a large opening is easily bent compared to the insulation sheet of the pressure sensitive switch having a small opening, and the sensitivity of the pressure sensitive switch having a large opening is improved compared to the pressure sensitive switch having a small opening. Accordingly, for example, when the pressure sensitive switch is disposed at the position passing through the center in the right and left direction of the cushion pad 60 and the pressure sensitive switch is disposed at each of right and left ends thereof, it is possible to suppress a variation in the sensitivity of the pressure sensitive switch by setting the openings of the pressure sensitive switches to be different sizes. Furthermore, the diameter of the opening 31 of the above-described embodiments is set to be slightly smaller than the diameter of the first electrode 12, but may be equal to or larger than the diameter of the first electrode 12.

Further, in the above-described embodiments, the first electrode 12 and the second electrode 22 have the same shape and size, and hence completely overlap each other. However, the first electrode 12 and the second electrode 22 may have different shapes or sizes and may not completely overlap each other as long as the pressure may be detected in the area.

Further, in the above-described embodiments, the cushion members 40 to 42 are stuck to the lower surface of the first insulation sheet 11, but the cushion member 40 may be omitted. When the cushion members 40 to 42 are omitted, the pressure sensitive switches SW1 to SW3, and SW11 or SW12 may be decreased in thickness.

Furthermore, when the cushion members 41 and 42 of the fifth embodiment are omitted, the shortest distance D1 may be smaller than the shortest distance D2 by changing the thickness or the like of the component other than the cushion members 41 and 42 as described above.

Further, even when the cushion members 40 to 42 are omitted, the pressure sensitive switches SW1 to SW3, and SW11 or SW12 are pressed from the top side thereof. For this reason, it is possible to prevent a problem in which the pressure sensitive switches SW1 to SW3, and SW11 or SW12 are not turned on due to the omission of the cushion member 40. Here, it is desirable to provide the cushion member 40 from the viewpoint of adjusting the sensitivity of the pressure sensitive switches SW1 to SW3, and SW11 or SW12 as described above.

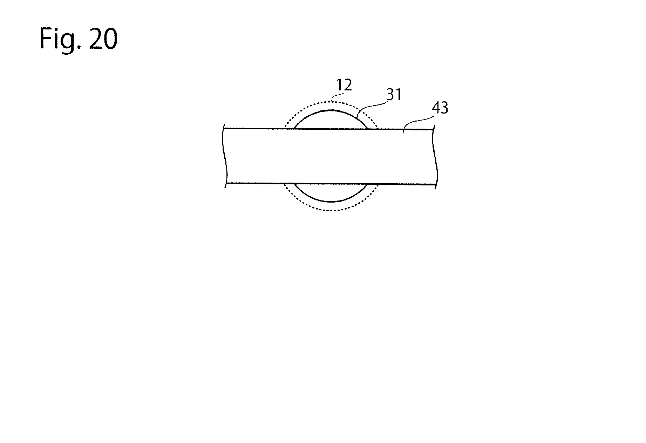

Further, in the above-described embodiment, the cushion members 40 to 42 which cover the entire opening 31 in the spacer 30 through the first insulation sheet 11 are employed, but a cushion member 43 which covers a part of the opening 31 may be employed, for example, as illustrated in Fig. 20. When such a cushion member 43 is employed, the sensitivity of the pressure sensitive switches SW1 to SW3, and SW11 or SW12 may be adjusted by adjusting a ratio (the blocking amount of the cushion member with respect to the opening) in which the cushion member 43 blocks the opening.

Furthermore, when the number of the pressure sensitive switches is set two or more, the pressure sensitive switches may have different blocking amounts of the cushion member 43 with respect to the opening. For example, when the cushion member 43 is applied to the second pressure sensitive switch SW2 and the cushion member 40 is applied to the first pressure sensitive switch SW1, the sensitivity of the first pressure sensitive switch SW1 may be set to be higher than the sensitivity of the second pressure sensitive switch SW2.

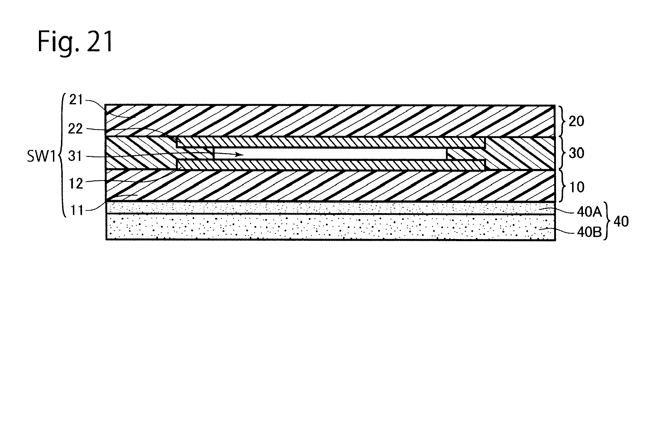

Further, in the above-described embodiment, the cushion member 40 that is stuck to the lower surface of the first insulation sheet 11 is a single-layer structure, but may be a double-layer structure. Specifically, as illustrated in Fig. 21, the first cushion member 40A is stuck to the lower surface of the first insulation sheet 11, and the second cushion member 40B is stuck to the lower surface of the first cushion member 40A. The rigidity of the second cushion member 40B is set to be smaller than the rigidity of the first cushion member 40A.

In such a configuration, the first cushion member 40A mainly serves as a member that adjusts the deformation degree of the first insulation sheet 11, and the second cushion member 40B mainly serves as a member that reduces the load applied from the cushion pad 60.

Accordingly, it is possible to simply improve the durability of the pressure sensitive switches SW1 to SW3, and SW11 or SW12 and to adjusts the sensitivity of the pressure sensitive switches SW1 to SW3, and SW11 or SW12 compared to the case where the first cushion member 40A and the second cushion member 40B are formed as a single-layer cushion member corresponding to the second cushion member 40B.

Furthermore, the first cushion member 40A may have rigidity of a degree in which the cushion member is strained by the thickness of the spacer 30. Further, it is more desirable that the thickness of the first cushion member 40A having rigidity larger than the rigidity of the second cushion member 40B be smaller than the thickness of the second cushion member 40B in that the sensitivity of the pressure sensitive switches SW1 to SW3, and SW11 or SW12 is adjusted while the durability thereof is improved.

Further, in the above-described embodiment, the spring 73 is formed in an S-shape, but may be formed in various shapes, for example, a Z-shape. Furthermore, the curved portions of the spring 73 may be formed continuously, may be formed at a predetermined interval, or may be formed at a random interval.

Further, the repeatedly curved portions may have the same shape or may have different shapes obtained by the combination of, for example, the S-shape and the Z-shape or the reversed shape of the ⊃-shape or the U-shape. Further, the number of the repeatedly curved portions may be zero, but may be desirably set to a certain number. Furthermore, the plurality of springs 73 are stretched over the cushion pad 60 in the front to back direction, but may be disposed in the right and left direction or the inclined direction.

Further, in the above-described embodiments, any member is not provided between the pressure sensitive switch SW1, SW2, SW11, or SW12 and the cushion pad facing the pressure sensitive switch.

However, it is desirable that a reinforcement member that moves in synchronization with the displacement of the cushion pad 60 be provided between the cushion pad facing the pressure sensitive switch and the pressure sensitive switch SW1, SW2, SW11, or SW12.

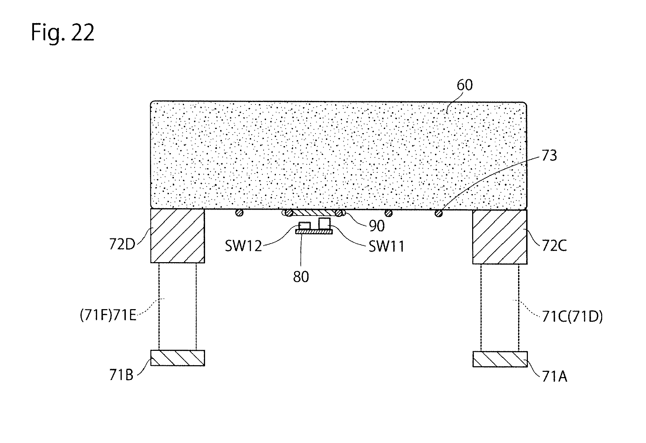

Specifically, for example, an embodiment illustrated in Fig. 22 may be exemplified. In the embodiment, a plate-shaped reinforcement member 90 is disposed between the group of the first pressure sensitive switch SW11 and the second pressure sensitive switch SW12 and the cushion pad facing the pressure sensitive switch and between the adjacent springs 73. One end of the reinforcement member 90 is fixed to one of the adjacent springs 73, and the other end of the reinforcement member 90 is fixed to the other of the adjacent springs 73.

When such a reinforcement member 90 is provided, it is possible to prevent the cushion pad facing the reinforcement member 90 from being drooped to the lower side of the reinforcement member 90 even when the lower surface of the cushion pad is drooped due to the degradation in time of the cushion pad 60. Accordingly, it is possible to suppress degradation in precision of distinguishing the person and the article or the persons having different body weights from each other caused when the lower surface of the cushion pad is dropped. In addition, even when the lower surface of the cushion pad is provided with unevenness, it is possible to suppress degradation in precision of distinguishing the person and the article or the persons having different body weights from each other due to the unevenness.

Furthermore, a thin film-like reinforcement member that is stuck to the cushion pad facing, for example, the first pressure sensitive switch SW11 and the second pressure sensitive switch SW12 may be employed instead of such a reinforcement member 90. Here, from the viewpoint of preventing the lower surface of the cushion pad from being drooped to the lower side of the spring 73, it is desirable to employ the reinforcement member 90 compared to the case of employing the thin film-like reinforcement member.

As the material of the reinforcement member, a material having rigidity larger than the rigidity of the cushion pad 60 may be used. That is, it is desirable that the material has larger rigidity. Specifically, metal or resin may be exemplified.

Further, in the above-described embodiments, employed is the seat sensor 1, 101, or 102 that includes the pressure sensitive switches SW1 to SW3 in which the first electrode 12 is one switch element and the second electrode 22 is the other switch element.

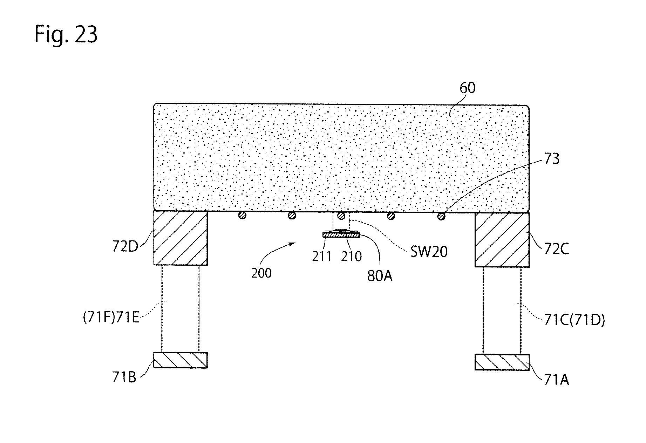

However, a seat sensor 200 illustrated in, for example, Fig. 23 may be employed. The seat sensor 200 includes a pressure sensitive switch SW20 in which a metal foil 210 supported at the lower side of one spring 73 in the vertical direction of the lower surface of the cushion pad with a gap with respect to the spring 73 is one switch element and the spring 73 is the other switch element.

In the seat sensor 200, the metal foil 210 is printed on one surface of a substrate 211. Here, the seat sensor is placed on, for example, the sensor mount 80A through the substrate 211 and is supported by the support frame 72 through the mount 80A.

Furthermore, the sensor mount 80A may be the sensor mount 81 or 82 or the other mount. Briefly, a mount capable of placing one switch element thereon may be employed. When such a mount is formed as a non-conductive member formed of a resin, the substrate 211 may be omitted.

Further, in the seat sensor 200, the metal foil 210 is used as one switch element. However, for example, a metal bar may be used. Briefly, members having various shapes or materials may be used as long as each member is one switch element (the contact point) forming the switch.

Further, in the seat sensor 200, the spring 73 is used as the other switch element, but a member other than the spring 73 may be the other switch element. For example, an insulation substrate may be attached to the spring 73, and the other switch element may be provided in a portion facing one switch element in the insulation substrate.

Briefly, when the spring 73 facing one switch element includes the other switch element, the other switch element may be directly or indirectly provided. Here, when the other switch element is formed as the spring facing one switch element, the existing spring for placing the cushion pad thereon serves as the other switch element. For this reason, it is possible to appropriately detect the sitting state by a simple configuration in which the other switch element is omitted compared to the case where the other switch element is attached to the spring as a physical member.

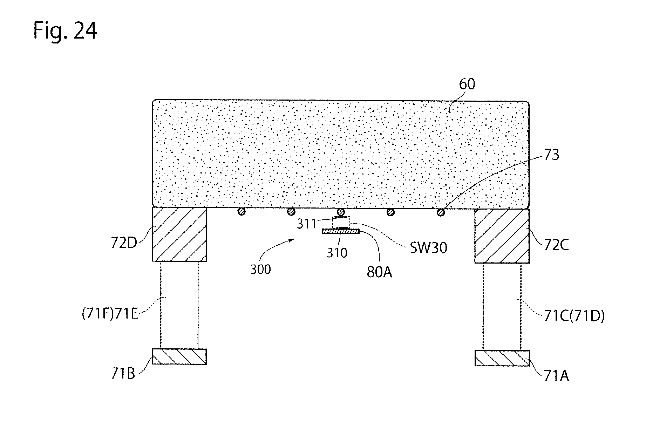

As a separate example, a seat sensor 300 illustrated in Fig. 24 may be employed. The seat sensor 300 includes a pressure sensitive switch SW30 in which a magnetic sensor 310 supported at the lower side of one spring 73 in the vertical direction of the lower surface of the cushion pad while having a gap with respect to the spring 73 is one switch element and a magnet 311 attached to the spring 73 by an attachment member (not illustrated) is the other switch element.

In the seat sensor 300, the magnetic sensor 310 is placed on, for example, the sensor mount 80A and is supported by the support frame 72 through the mount 80A.

Furthermore, the sensor mount 80A may be the sensor mount 81 or 82 or the other mount. Briefly, a mount for placing one switch element thereon may be used.

Further, the attachment member may be used to attach the magnet 311 to the spring 73. Here, it is desirable that the attachment member attach the magnet 311 to the spring 73 so as to face the magnetic sensor 310 as one switch element.

As obvious from the pressure sensitive switches SW1 to SW3, and SW20, or SW30, the pressure sensitive switch may have a configuration in which one switch element forming the switch is supported by the member that does not move in synchronization with the displacement of the cushion pad caused by the sitting operation and the other switch element forming the switch is disposed between one switch element and the cushion pad so as to be displaced toward one switch element. With such a configuration, it is possible to distinguish the person and the article from each other as described above.

Further, when such a pressure sensitive switch is disposed below the cushion pad while having a gap with respect to the lower surface of the cushion pad in the adjacent state, it is possible to distinguish the persons having different body weights as described above.

Furthermore, combinations, omissions, modifications, and additions of the known technique may be appropriately made in the components of the seat device within the scope not departing from the object of the invention other than the content of the first to fifth embodiments or the other embodiments.

### Industrial Applicability

The invention is available in a conveyance such as a vehicle and is particularly available in a seat to fasten a seat belt.

### Reference Signs List

1, 101, 102, 200, 300 ... seat sensor
2, 3 ... sensor part
4 ... cable
5 ... seat device
10 ... first electrode sheet
11 ... first insulation sheet
12 ... first electrode
13, 23 ... terminal
14 ... first interconnection wire
20 ... second electrode sheet
21 ... second insulation sheet
22 ... second electrode
24 ... second interconnection wire
30 ... spacer
31 ... opening
32 ... slit
40 to 43 ... cushion member
40A ... first cushion member
40B ... second cushion member
60 ... cushion pad
70 ... cushion placement unit
71 ... mount
72 ... support frame
73 ... spring
80A, 80B, 81, 82 ... sensor mount
90 ... reinforcement member
SW1 to SW3, SW11, SW12, SW20, SW30 ... pressure sensitive switch
210 ... metal foil
211 ... substrate
310 ... magnetic sensor
311 ... magnet

## Claims

1. A seat device comprising:
a plurality of springs that are stretched in parallel over an opening of a frame;
a cushion pad that is placed on the plurality of springs;
a member that does not move in synchronization with the displacement of the cushion pad caused by a sitting operation; and
a pressure sensitive switch that is disposed below the cushion pad inside the opening of the frame while having a gap with respect to a lower surface of the cushion pad,
wherein one switch element that forms a switch in the pressure sensitive switch is supported by the member,
wherein the other switch element that forms the switch in the pressure sensitive switch is disposed between the one switch element and the cushion pad so as to be displaced toward the one switch element, and
wherein the one switch element and the other switch element are disposed so that at least a part of the elements face each other in the up and down direction.

2. The seat device according to claim 1,
wherein the pressure sensitive switch faces the lower surface of the cushion pad.

3. The seat device according to claim 1 or 2,
wherein the pressure sensitive switch is disposed below the plurality of springs.

4. The seat device according to claim 3,
wherein the pressure sensitive switch is disposed at a position not overlapping the spring in the vertical direction of the spring.

5. The seat device according to any one of claims 1 to 4,
wherein the pressure sensitive switch is disposed near the frame inside the opening of the frame.

6. The seat device according to any one of claims 1 to 5, further comprising:
a sensor mount that places the pressure sensitive switch thereon,
wherein the sensor mount is fixed to the member.

7. The seat device according to claim 6,
wherein the sensor mount has elasticity in the displacement direction of the cushion pad.

8. The seat device according to any one of claims 1 to 7, further comprising:
a reinforcement member that is provided between the pressure sensitive switch and the cushion pad facing the pressure sensitive switch and has rigidity larger than the rigidity of the cushion pad,
wherein the reinforcement member is synchronized with the displacement of the cushion pad.

9. The seat device according to any one of claims 1 to 8,
wherein the pressure sensitive switch includes a first insulation sheet which has flexibility, a second insulation sheet which has flexibility and is disposed near the lower surface of the cushion pad in relation to the first insulation sheet, a sheet-like spacer which has an opening and is interposed between the first insulation sheet and the second insulation sheet, the one switch element which is provided on the surface of the first insulation sheet, and the other switch element which is provided on the surface of the second insulation sheet and faces the one switch element through the opening of the spacer.

10. The seat device according to claim 9,
wherein a cushion member is provided between the member and the first insulation sheet so as to cover at least a part of the opening of the spacer through the first insulation sheet.

11. The seat device according to claim 10,
wherein the cushion member is formed as a double-layer structure including a first cushion member provided at the opposite side to the spacer in the first insulation sheet and a second cushion member provided at the opposite side to the first insulation sheet in the first cushion member and having rigidity different from the rigidity of the first cushion member.

12. The seat device according to claim 11,
wherein the rigidity of the second cushion member is smaller than the rigidity of the first cushion member.

13. The seat device according to any one of claims 1 to 12,
wherein the pressure sensitive switch includes a first pressure sensitive switch and a second pressure sensitive switch that are adjacent to each other,
wherein the first pressure sensitive switch is turned on when a first weight or more is applied from the seat surface of the cushion pad, and
wherein the second pressure sensitive switch is turned on when a second weight larger than the first weight is applied from the seat surface of the cushion pad.
